# EUROPÄISCHE PATENTANMELDUNG

(11) **EP 3 960 606 A1**
(43) Veröffentlichungstag der Anmeldung: **02.03.2022**
(21) Anmeldenummer: 21020407.9
(22) Anmeldetag: 10.08.2021
(51) Int. Cl.: B62K 25/02, B62M 9/12

(54) **MEHRFACHRITZEL-BAUGRUPPE UND HINTERRADBAUGRUPPE FÜR EIN FAHRRAD MIT KETTENSCHALTUNG**

(30) Priorität: 01.09.2020 DE 102020005366; 02.07.2021 DE 102021003431
(71) Anmelder: SRAM Deutschland GmbH, 97424 Schweinfurt (DE)
(72) Erfinder: Heyna, Sebastian, 97456 Dittelbrunn/OT Hambach (DE)

(57) **Zusammenfassung**

Eine Mehrfachritzel-Baugruppe (10) für eine Hinterradbaugruppe (3) für ein Fahrrad mit Kettenschaltung umfasst eine Mehrfachritzelanordnung (12) und eine Verschlussschraubenanordnung (14). Die Mehrfachritzelanordnung (12) ist zur drehmomentübertragenden Kopplung mit einem Antreiber (16) der Hinterradbaugruppe (3) ausgebildet und umfasst wenigstens 11 Ritzel mit sich unterscheidenden Zähnezahlen. Die Mehrfachritzel-Baugruppe (10) ist derart ausgebildet, dass im montierten Zustand wenigstens zwei der kleinsten Ritzel (R11, R12) über die Verschlussschraubenanordnung (14) an dem Antreiber (16) axial fixiert sind. Die Verschlussschraubenanordnung (14) weist einen Schaftabschnitt (36) zur Aufnahme wenigstens eines der wenigstens zwei kleinsten Ritzel (R11, R12) auf, wobei der Schaftabschnitt (36) an seinem einen Endbereich mit einem axial außenliegenden Anschlagabschnitt (38) versehen ist und wobei dem Schaftabschnitt (36) an seinem entgegengesetzten Endbereich wenigstens ein Außengewinde (40) zugeordnet ist, mit dem die Verschlussschraubenanordnung (14) in ein zugeordnetes Innengewinde (34) zum Fixieren der Verschlussschraubenanordnung (14) einschraubbar ist. Das dem Schaftabschnitt zugeordnete Außengewinde (40) weist einen Außendurchmesser (d2) auf, der größer ist als ein Außendurchmesser (d3) des Schaftabschnitts (36) in demjenigen Bereich, in dem das wenigstens eine der wenigstens zwei kleinsten Ritzel (R11, R12) aufgenommen ist.

## Beschreibung

Die vorliegende Erfindung betrifft eine Mehrfachritzel-Baugruppe für ein Fahrrad mit Kettenschaltung, die eine Mehrfachritzelanordnung sowie eine Verschlussschraubenanordnung umfasst. Ferner betrifft die Erfindung eine Hinterradbaugruppe für ein Fahrrad mit Kettenschaltung mit einer Mehrfachritzel-Baugruppe.

Eine Hinterradanordnung für ein Fahrrad mit Kettenschaltung umfasst typischerweise eine Mehrfachritzelanordnung, die mit der Hinterradnabe über einen Antreiber gekoppelt oder koppelbar ist. Ritzel der Mehrfachritzelanordnung sind mit dem Antreiber drehmomentübertragend verbunden. Zur Fixierung der Ritzel gegen eine axiale Verschiebung wird herkömmlicherweise ein Verschlussring verwendet. Ein solcher Verschlussring weist an einem Endbereich ein Außengewinde und an einem entgegengesetzten Endbereich eine sich radial erstreckende Auskragung auf. Im montierten Zustand der Hinterradbaugruppe greift das Außengewinde des Verschlussrings in ein Innengewinde des Antreibers ein, sodass die Auskragung an einer Außenseitenfläche des kleinsten Ritzels anliegt. Auf diese Weise fixiert der Verschlussring die Ritzel der Mehrfachritzelanordnung gegen eine axiale Verschiebung.

Der Antreiber steht über eine Freilaufkupplung mit der Hinterradnabe in drehmomentübertragendem Eingriff und lässt eine Drehmomentübertragung in der einen Drehrichtung (Antriebsrichtung) zu, wohingegen der Antreiber in der anderen Richtung von der Hinterradnabe über eine Freilaufmechanik drehentkoppelt ist. Die Hinterradnabe ist im montierten Zustand mit einer Hinterradachse verbunden, die an ihren entgegengesetzten Enden an einem jeweiligen Ausfallende eines Fahrradrahmens angebracht ist. Der Fahrradrahmen legt somit zwischen seinen beiden Ausfallenden und deren Innenabstand zueinander eine Einbaubreite für alle an der Hinterradnabe zu befestigenden Komponenten fest, wie ein Laufrad, einen Antreiber, eine Mehrfachritzelanordnung, eine Nabenendkappe und ggf. weiterer Komponenten beispielsweise zur Anbringung eines hinteren Kettenumwerfers.

In den vergangenen Jahren haben sich Kettenschaltungen mehr und mehr durchgesetzt, bei denen im Bereich der Tretkurbel lediglich ein einziges Kettenrad vorgesehen ist. Diese Entwicklung geht einher mit der stärkeren Verbreitung von motorisch unterstützten Fahrrädern. Sie wurde aber angestoßen durch die Idee, eine gewichtsintensive Anordnung mehrerer Kettenräder mit einem zugeordneten vorderen Umwerfer zu eliminieren. Durch diese Entwicklung wurde es erforderlich, eine größere Übersetzungsspreizung über die Bereitstellung hinreichend vieler Gänge an der hinteren Mehrfachritzelanordnung (Kassette) bereitzustellen. Aufgrund der begrenzten und meist standardisierten Einbaubreite, die für alle an der Hinterradnabe zu befestigenden Komponenten zur Verfügung steht, und der vorgegebenen Breite handelsüblicher Ketten kann aber der steigende Bedarf nach mehr Gängen und folglich mehr Ritzeln nicht einfach dadurch gelöst werden, dass beliebig viele Ritzel der Mehrfachritzelanordnung hinzugefügt werden. Der zur Verfügung stehende Bauraum (Einbaubreite) steht der Breite üblicher Ketten und der entsprechenden Breite der einzelnen Ritzel als limitierender Faktor gegenüber. Um mit einer begrenzten Ritzelanzahl dennoch ein verbessertes Übersetzungsverhältnis zu erzielen, besteht ein Bestreben darin, den Übersetzungsbereich zwischen dem größten und dem kleinsten Ritzel zu vergrößern. Besonders wichtig ist dabei für den Benutzer im professionellen Radsport oder auch im Freizeitsport sowohl einen möglichst kleinen (größtes Ritzel) als auch einen möglichst großen Gang (kleinstes Ritzel) zur Verfügung zu haben, um einerseits steile Anstiege komfortabel fahren zu können und andererseits bei gleicher Trittfrequenz eine hohe Geschwindigkeit zu erzielen. Die dazwischenliegenden Ritzel der Mehrfachritzelanordnung müssen entsprechend aufeinander abgestimmt sein. Große Übersetzungssprünge zwischen benachbarten Ritzeln sind möglich, sollten aber in der Regel vermieden werden.

Für das Bestreben, kleine Ritzel für einen möglichst großen Gang bereitzustellen, setzt die Geometrie des Antreibers bei herkömmlichen Lösungen Grenzen. Herkömmlicherweise sind die Ritzel am radialen Außenumfang des Antreibers befestigt, wodurch ein minimaler Innendurchmesser (Fußkreis) der Ritzel durch den Außendurchmesser des Antreibers bereits vorgegeben ist. Bei der Verwendung von auf dem Markt verbreiteten Antreibern lässt sich aufgrund der Geometrie des Antreibers gerade noch ein kleinstes Ritzel mit 11 Zähnen an der Ritzelanordnung anbringen und durch den Verschlussring gegen eine axiale Verschiebung fixieren.

Dennoch besteht ein Bedarf im Radsport an sehr kleinen Ritzeln, d.h. Ritzeln mit 10 oder weniger Zähnen. Um diesem Bedarf gerecht zu werden, gibt es im Stand der Technik Ansätze, einen neuen, sich von dem Standardantreiber unterscheidenden Antreiber zu verwenden, der durch geeignete konstruktive Maßnahmen die Anbringung eines Ritzels mit einer Zähnezahl kleiner als 11 zulässt. Derartige Sonderlösungen sind jedoch im Vergleich zu Standardlösungen kostenintensiver aufgrund der geringeren Fertigungszahlen und zudem meist nicht kompatibel mit bereits herkömmlichen Bauteilen einer Hinterradbaugruppe und den handelsüblich verfügbaren Antreibern. Derartige Sonderlösungen lassen sich darüber hinaus im Markt schwer platzieren.

Aus dem Dokument EP 1 342 657 B1 ist ein solcher speziell zur Aufnahme kleinerer Ritzel ausgebildeter Antreiber bekannt. Der Antreiber weist ein erstes röhrenförmiges Element auf, das mit einem Freilaufmechanismus an der Fahrradnabe befestigbar ist. An das axial außenliegende Ende des ersten röhrenförmigen Elements kann ein zweites röhrenförmiges Element mit kleinerem Durchmesser gekoppelt werden. Das zweite röhrenförmige Element weist einen Außendurchmesser auf, der kleiner ist als derjenige des ersten röhrenförmigen Elements und der es erlaubt, darauf ein Ritzel mit 10 Zähnen zu befestigen und radial abzustützen. In einem Ausführungsbeispiel sind die Aufnahme sowie die radiale Abstützung von drei Ritzeln an dem zweiten röhrenförmigen Element gezeigt. Zur axialen Fixierung der mit dem Antreiber gekoppelten Ritzel greift ein mit einem Innengewinde versehener Verschlussring in ein Außengewinde des zweiten röhrenförmigen Elements derart ein, dass der Verschlussring an einer Außenseitenfläche des kleinsten Ritzels anliegt.

Eine weitere Möglichkeit zur Verwendung von zwei Ritzeln mit einem Innendurchmesser, der kleiner ist als ein Außendurchmesser des Antreibers, ist in der Offenlegungsschrift DE 10 2017 004 853 A1 gezeigt. Die zwei Ritzel mit kleinerem Durchmesser sind über einen ersten Verbindungsabschnitt miteinander und über einen weiteren Verbindungsabschnitt mit einem kleinsten auf dem Antreiber angeordneten Ritzel verbunden In einem Ausführungsbeispiel sind die zwei Ritzel mit kleinerem Innendurchmesser freitragend ausgeführt. Es ist ein Sperrelement vorgesehen, das die Ritzel gegen eine axiale Verschiebung fixiert. Das Sperrelement umfasst ein Außengewinde, das mit einem Innengewinde des Antreibers in Eingriff bringbar ist, einen Schaftabschnitt, an dem die zwei Ritzel mit kleinerem Durchmesser aufgenommen sind, und eine sich radial erstreckende Auskragung. Das Sperrelement ist an die Aufnahme von durchmesserkleineren Ritzeln angepasst, indem der Außendurchmesser des Schaftabschnitts größer ist als ein Nenndurchmesser des Außengewindes und sich die Auskragung soweit nach radial außen erstreckt, dass sie an dem kleinsten Ritzel anliegt und von diesem ausgeübte axiale Kräfte aufnehmen kann.

Der Erfindung liegt die Aufgabe zugrunde, eine Mehrfachritzel-Baugruppe und eine Hinterradbaugruppe bereitzustellen, die auf einfache Weise ein verbessertes Übersetzungsverhältnis bereitstellt und sich auch mit einem herkömmlichen Antreiber-Typ koppeln lässt.

Diese Aufgabe wird durch eine Mehrfachritzel-Baugruppe für ein Fahrrad mit Kettenschaltung mit den Merkmalen des Anspruchs 1 gelöst. Ferner wird diese Aufgabe durch eine Hinterradbaugruppe für ein Fahrrad mit Kettenschaltung mit den Merkmalen des Anspruchs 16 gelöst.

Weitere Ausführungsformen der Erfindung sind in den abhängigen Patentansprüchen angegeben.

Gemäß einem ersten Aspekt der Erfindung umfasst eine Mehrfachritzel-Baugruppe für eine Hinterradbaugruppe für ein Fahrrad mit Kettenschaltung eine Mehrfachritzelanordnung und eine Verschlussschraubenanordnung. Die Mehrfachritzelanordnung ist zur drehmomentübertragenden Kopplung mit einem Antreiber der Hinterradbaugruppe ausgebildet und umfasst wenigstens 11 Ritzel mit sich unterscheidenden Zähnezahlen. Die Mehrfachritzel-Baugruppe ist derart ausgebildet, dass im montierten Zustand des Antreibers mit der Mehrfachritzel-Baugruppe wenigstens zwei der kleinsten Ritzel über die Verschlussschraubenanordnung an dem Antreiber axial fixiert sind. Die Verschlussschraubenanordnung weist einen Schaftabschnitt zur Aufnahme wenigstens eines der wenigstens zwei kleinsten Ritzel auf. Der Schaftabschnitt ist an seinem einen Endbereich mit einem axial außenliegenden Anschlagabschnitt versehen. Ferner ist dem Schaftabschnitt an seinem entgegengesetzten Endbereich wenigstens ein Außengewinde zugeordnet, mit dem die Verschlussschraubenanordnung in ein zugeordnetes Innengewinde zum Fixieren der Verschlussschraubenanordnung einschraubbar ist. Die erfindungsgemäße Lösung sieht vor, dass das dem Schaftabschnitt zugeordnete Außengewinde einen Außendurchmesser aufweist, der größer ist als der Außendurchmesser des Schaftabschnitts in demjenigen Bereich, in dem das wenigstens eine der wenigstens zwei kleinsten Ritzel aufgenommen ist.

Die erfindungsgemäße Lösung sieht vor, dass wenigstens zwei der kleinsten Ritzel, d. h. wenigstens zwei der Ritzel mit den kleinsten Zähnezahlen, an übrigen Ritzeln der Mehrfachritzelanordnung durch die Verschlussschraubenanordnung axial fixiert oder fixierbar sind. Dadurch kann die Mehrfachritzelanordnung im Vergleich zu einer herkömmlichen Befestigung der Ritzel an einer Außenumfangsfläche des Antreibers mehr Ritzel umfassen. Ferner stellt die erfindungsgemäße Lösung eine Möglichkeit bereit, die durch den Außenumfang des Antreibers bedingte Limitierung des Innendurchmessers der kleinsten Ritzel zumindest für das wenigstens ein Ritzel zu überwinden, das an dem Schaftabschnitt der Verschlussschraubenanordnung aufgenommen ist. In diesem Zusammenhang ist vorgesehen, dass der Schaftabschnitt einen kleineren Außendurchmesser als der Außendurchmesser des Antreibers aufweist. Zur Fixierung der Verschlussschraubenanordnung an einem Antreiber oder einer Mehrfachritzelanordnung dient das dem Schaftabschnitt zugeordnete Außengewinde, das in ein Innengewinde des Antreibers eingreifen kann, und vorzugsweise als Ringelement ausgebildet ist. Das dem Schaftabschnitt zugeordnete Außengewinde dient also als Bindeglied zwischen dem Schaftabschnitt und dem Innengewinde des Antreibers. Folglich kann das Innengewinde des Antreibers genutzt werden, um die Verschlussschraubenanordnung an dem Antreiber zu fixieren. Somit kann mit der erfindungsgemäßen Lösung ein größeres Übersetzungsverhältnis der Kettenschaltung erzielt werden.

In einer Ausführungsform der Erfindung kann das wenigstens eine der wenigsten zwei kleinsten Ritzel, das an dem Schaftabschnitt aufgenommen ist, freitragend ausgeführt sein. D. h. es kann ein radialer Abstand zwischen dem Schaftabschnitt und dem daran aufgenommenen wenigstens einem Ritzel oder aller daran aufgenommenen Ritzel vorhanden sein.

Wenn in dieser Anmeldung ein kleinstes Ritzel angesprochen ist, dann bezieht sich dies auf dasjenige Ritzel, das die kleinste Zähnezahl aufweist. Ist von mehreren kleinsten Ritzeln die Rede, so sind damit diejenigen benachbarten Ritzel mit den kleinsten Zähnezahlen gemeint. In einer Ausführungsform der Erfindung weist ein kleinstes Ritzel beispielsweise 10 Zähne auf. Jedoch sind auch kleinste Ritzel mit 9 oder 8 Zähnen möglich. Je kleiner die Zähnezahl, desto größer kann das mit der Mehrfachritzelanordnung erzielbare Übersetzungsverhältnis der Kettenschaltung bei unverändertem größtem Ritzel sein. Begrenzt wird die minimale Zähnezahl durch den minimal möglichen Innendurchmesser des kleinsten Ritzels im Zusammenhang mit der verwendeten Fahrradkette. Die erfindungsgemäße Mehrfachritzel-Baugruppe kann eine Mehrfachritzelanordnung mit 12 Ritzeln oder sogar 13 Ritzeln oder mehr umfassen. Das größte Ritzel kann eine Zähnezahl von mindestens 48, insbesondere 50, 51 oder 52 Zähnen aufweisen.

Der axial außenliegende Anschlagabschnitt kann dazu eingerichtet sein, Kräfte aufzunehmen, die nach axial außen auf die Verschlussschraubenanordnung wirken. Die Richtung nach axial außen ist definiert als ausgehend von einer Fahrradmittelebene, die orthogonal zu der Drehachse der Mehrfachritzelanordnung und durch einen Mittelpunkt zwischen zwei gegenüberliegenden Rahmenausfallenden eines Fahrradrahmens verläuft, hin zu demjenigen Rahmenausfallende, das der Mehrfachritzelanordnung näher ist. Die Richtung nach axial innen ist der Richtung nach axial außen entgegengesetzt. Eine Richtung nach radial außen verläuft orthogonal zu einer Drehachse der Mehrfachritzelanordnung und von dieser Drehachse weg. Die Richtung nach radial innen ist der Richtung nach radial außen entgegengesetzt.

Das Innengewinde, in das das dem Schaftabschnitt zugeordnete Außengewinde zum Fixieren der Verschlussschraubenanordnung eingreifen kann, kann an dem Antreiber angeordnet sein. In einer alternativen Ausführungsform kann dieses Innengewinde an einem radial innenliegenden Bereich der Mehrfachritzelanordnung angeordnet sein. Die ineinandergreifenden Gewinde sind so ausgelegt, dass eine hinreichende Überlappung zur Übertragung vom im Betrieb auftretenden Kräften erfolgen kann.

An dem Schaftabschnitt ist gemäß einer Weiterbildung der Erfindung wenigstens ein Ritzel zusammen mit einem diesem Ritzel zugeordneten Verbindungsabschnitt aufgenommen. Gemäß einer alternativen Ausführungsvariante können zwei Ritzel mit einem diese zwei Ritzel verbindenden Verbindungsabschnitt an dem Schaftabschnitt aufgenommen sein. Zu diesem Zweck kann eine Länge von einer Innenseitenfläche des dem Schaftabschnitt zugeordneten Außengewindes zu einer Innenseitenfläche des axial außenliegenden Anschlagabschnitts zwischen 3,2 mm und 5,0 mm sein. Der Verbindungsabschnitt kann ein Flanschabschnitt oder ein Haltebolzen sein. Der Verbindungsabschnitt kann integral mit den angrenzenden Ritzeln hergestellt oder an diese angefügt sein.

Im Allgemeinen kann die axiale Länge der Verschlussschraubenanordnung kleiner sein als eine Distanz zwischen vier oder drei benachbarten Ritzeln, gemessen von einer Innenseitenfläche des größten der vier bzw. drei Ritzel und einer Außenseitenfläche des kleinsten der vier bzw. drei Ritzel.

Gemäß einer Weiterbildung der Erfindung ist ein Außendurchmesser des axial außenliegenden Anschlagabschnitts kleiner als, genauso groß wie oder größer als ein Außendurchmesser des dem Schaftabschnitt zugeordneten Außengewindes. Es versteht sich, dass eine kleinere Ausführung des Anschlagabschnitts platzsparender ist, aber dennoch hinreichend stabil ausgebildet sein sollte, um im Betrieb auftretende axiale Kräfte aufzunehmen. Der Außendurchmesser des axial außenliegenden Anschlagabschnitts kann zudem größer sein als der Außendurchmesser des Schaftabschnitts. Auf diese Weise entsteht ein Hinterschnitt am Außenumfang der Verschlussschraubenanordnung. Unter einem Hinterschnitt wird im Zusammenhang mit der vorliegenden Erfindung verstanden, dass ein Bereich vorhanden ist, dessen Außenumfangsfläche durch zwei axiale Anschläge mit größerem Durchmesser begrenzt ist. Die Ausbildung eines Hinterschnitts ermöglicht es der Verschlussschraubenanordnung gleichzeitig ein hinreichend groß dimensioniertes Außengewinde, einen Schaftbereich mit kleinerem Durchmesser als der Außendurchmesser des Antreibers und eine axiale Fixierung von an dem Schaftabschnitt aufgenommenen Ritzeln in einer sehr platzsparenden Ausführung bereitzustellen.

Das dem Schaftabschnitt zugeordnete Außengewinde ist gemäß einer Weiterbildung der Erfindung integral an dem Schaftabschnitt angeformt oder mit diesem integral hergestellt. Ebenfalls kann der axial außenliegende Anschlagabschnitt integral an dem Schaftabschnitt angeformt sein oder mit diesem integral hergestellt sein. Zumindest eines aus dem Außengewinde und dem Anschlagabschnitt kann während der Montage der Mehrfachritzel-Baugruppe angeformt werden, nachdem das wenigstens eine der wenigstens zwei kleinsten Ritzel im oder am Schaftbereich aufgenommen worden ist. Das Anformen kann mittels Laserschweißen, Reibschweißen, Löten, Kleben, Pressen, Stiften, oder/und Falzen erfolgen. Die Verschlussschraubenanordnung kann also mindestens eine Fügestelle aufweisen, die beispielsweise mittels der vorstehenden Anformverfahren ausgebildet ist. Die Fügestelle kann orthogonal oder parallel zu der Drehachse der Mehrfachritzelanordnung verlaufen. Alternativ ist ein additives Fertigungsverfahren, beispielsweise ein 3D-Druckverfahren erfindungsgemäß möglich.

Alternativ kann der axial außenliegende Anschlagabschnitt und/oder das dem Schaftabschnitt zugeordnete Außengewinde mit dem Schaftabschnitt integral hergestellt und umgeformt sein. Durch das Umformen wird der Durchmesser des axial außenliegenden Anschlagabschnitts und/oder des Außengewindes relativ zum Schaftabschnitt vergrößert. Das umgeformte dem Schaftabschnitt zugeordnete Außengewinde und/oder der axial außenliegende Anschlagabschnitt weisen einen Außendurchmesser auf, der größer ist als der Außendurchmesser des Schaftabschnitts in dem Bereich, in dem die wenigstens zwei kleinsten Ritzel aufgenommen sind.

Dazu wird in einem ersten Schritt der axial außenliegende Anschlagabschnitt integral mit dem Schaftabschnitt und mit gleichem Außendurchmesser hergestellt. In einem zweiten Schritt wird der axial außenliegende Anschlagabschnitt und/oder der Gewindeabschnitt umgeformt, so dass sich gleichzeitig dessen Außendurchmesser vergrößert und dessen axiale Länge verringert. Das umzuformende Material wird aus der axialen Richtung in die radiale Richtung gedrängt. Das Umformen kann beispielsweise durch Bördeln geschehen. Auch das dem Schaftabschnitt zugeordnete Außengewinde lässt sich auf diese Art kostengünstig herstellen. Nach dem Umformen muss der vergrößerte Außendurchmesser des dem Schaftabschnitt zugeordneten Außengewindes in einem dritten Schritt nur noch mit einem Außengewinde versehen werden. Bei der Herstellung des axial außenliegenden Anschlagabschnitts und/oder des dem Schaftabschnitts zugeordneten Außengewinde werden vor dem Umformen die wenigstens zwei kleinsten Ritzel auf den Schaftabschnitt geschoben. Nach dem Umformen werden die wenigstens zwei kleinsten Ritzel durch den vergrößerten Außendurchmesser des axial außenliegenden Anschlagabschnitts und/oder des dem Schaftabschnitts zugeordnete Außengewindes in axialer Richtung auf dem Schaftabschnitt fixiert. Vorteilhaft bei dieser Ausführung ist, dass es weder zusätzlichen Teilen noch Fügestellen bedarf.

In einer weiteren alternativen Ausgestaltung kann der axial außenliegende Anschlagabschnitt durch eine Mehrzahl von Schnapphaken gebildet sein, die über den äußeren Umfang der Verschlussschraubenanordnung verteilt sind, wobei der Schaftabschnitt oder/und die Schnapphaken eine derartige Elastizität aufweisen, dass ein Ritzel oder eine Verbindung aus mehreren Ritzeln mit einem Innendurchmesser kleiner als der Außendurchmesser der Schnapphaken über die Schnapphaken schiebbar ist, sodass dieses oder diese im Bereich des Schaftabschnitts aufgenommen sind. Bei der Verwendung von Schnapphaken kann die Verschlussschraubenanordnung bereits vor der Montage der Mehrfachritzel-Baugruppe integral ausgebildet sein. Dies vereinfacht das Montageverfahren der Mehrfachritzel-Baugruppe.

In einer weiteren alternativen Ausgestaltung der Erfindung ist der axial außenliegende Anschlagabschnitt von dem Schaftabschnitt lösbar und in Form eines Sicherungselements ausgebildet, das mit dem Schaftabschnitt verbindbar ist, beispielsweise in eine in dem Endbereich des Schaftabschnitts ausgebildete Nut eingreift. Das Sicherungselement kann ein Ringelement sein, zum Beispiel ein Sprengring. Bei der Montage der Mehrfachritzel-Baugruppe können zunächst Ritzel der Mehrfachritzelanordnung im Bereich des Schaftabschnitts aufgenommen werden und im Anschluss kann das Sicherungselement in die Nut eingesetzt werden, um die Mehrfachritzelanordnung axial zu fixieren.

Alternativ kann der durchmessergrößere Gewinde- und/oder Anschlagsabschnitt der Verschlussschraube segmentiert ausgebildet sein. Die segmentierte Ausbildung der Verschlussschraube und des zumindest kleinsten Ritzels, erlaubt eine bajonettverschlussartige Verbindung zwischen den kleinsten Ritzeln und der Verschlussschraube. Die beiden Teile werden durch Ineinanderstecken und zueinander Verdrehen miteinander verbunden.

Auch eine Kombination aus den obengenannten Ausgestaltungen des axial außenliegenden Anschlagabschnitts und des dem Schaftabschnitts zugeordneten Außengewindes ist denkbar z. B. könnte das eine axiale Ende der Verschlussschraube durch ein Anformverfahren hergestellt sein und das andere axiale Ende durch Umformen. Genauso lassen sich die bereits genannten Ausgestaltungen mit den noch folgenden Ausführungsvarianten wie z. B. der zweiteiligen Verschlussschraube kombinieren. Wesentlich bei allen Kombinationen ist, dass der Außendurchmesser des dem Schaftabschnitt zugeordneten Außengewindes größer ist als der Außendurchmesser des Schaftabschnitts in demjenigen Bereich, in dem das wenigstens eine der wenigstens zwei kleinsten Ritzel aufgenommen ist.

Eine weitere Ausführungsvariante der Erfindung betrifft eine zweiteilige Verschlussschraubenanordnung, die ein erstes und ein zweites Bauteil umfasst. Die zwei Bauteile können voneinander lösbar sein. In einer Ausführungsform ist das dem Schaftabschnitt zugeordnete Außengewinde von dem Schaftabschnitt lösbar. Mögliche Verbindungsmittel umfassen Schraubverbindungen, Steckverbindungen, Verrastmechanismen und andere lösbare Verbindungsmittel.

In einer Weiterbildung der Erfindung kann das erste Bauteil eine erste Werkzeugschnittstelle und das zweite Bauteil eine zweite Werkzeugschnittstelle aufweisen. Die Werkzeugschnittstellen können radial innen an einer Innenumfangsfläche des ersten bzw. zweiten Bauteils angeordnet sein. Die zwei Werkzeugschnittstellen können identisch sein oder sich voneinander unterscheiden, um einen Eingriff eines gleichen bzw. zweier unterschiedlicher Werkzeuge zu ermöglichen. Auf diese Weise können beide Bauteile unabhängig voneinander mittels des entsprechenden Werkzeugs gehandhabt werden. Beispielsweise kann bei der Montage eines der Bauteile mit dem Antreiber verbunden werden und im Anschluss die beiden Bauteile verbunden werden. Alternativ können erst die zwei Bauteile miteinander verbunden werden und im Anschluss beide Bauteile gemeinsam mit dem Antreiber verbunden werden. Es versteht sich, dass die Demontage der Bauteile von dem Antreiber gleichermaßen erfolgen kann. Vorteilhafterweise erlauben die Werkzeugschnittstellen eine zerstörungsfreie Montage bzw. Demontage der beiden Bauteile von dem Antreiber in einem Zustand, in dem die nicht-freitragend ausgeführten Ritzel der Mehrfachritzelanordnung mit dem Antreiber gekoppelt sind.

Das dem Schaftabschnitt zugeordnete Außengewinde kann von dem ersten Bauteil umfasst sein, und der axial außenliegende Anschlagabschnitt kann von dem zweiten Bauteil umfasst sein. Das erste und das zweite Bauteil sind beispielsweise miteinander verschraubbar. Diese zweiteilige Verschlussschraubenanordnung vereinfacht die Montage der Mehrfachritzel-Baugruppe, da sie ein Verbinden der zwei Bauteile mit einem einfachen mechanischen Werkzeug ermöglicht.

Zum Beispiel kann ein aus dem Stand der Technik bekanntes Kassettenwerkzeug mit einem Außendurchmesser größer als 22 mm in die Werkzeugschnittstelle der zweiteiligen oder einteiligen Verschlussschraubenanordnung drehmomentübertragend eingreifen.

Genauer ausgeführt kann das erste Bauteil ein erstes Verbindungsgewinde aufweisen, das dazu eingerichtet ist, in ein komplementäres zweites Verbindungsgewinde des zweiten Bauteils einzugreifen. Die Verbindungsgewinde können an unterschiedlichen Positionen angeordnet sein, beispielsweise zwischen dem Schaftabschnitt und dem diesen zugeordneten Außengewinde oder im Bereich des Schaftabschnitts oder zwischen dem Schaftabschnitt und dem Anschlagabschnitt. Das Verbindungsgewinde des ersten Bauteils kann ein Außengewinde sein und das komplementäre Verbindungsgewinde des zweiten Bauteils kann ein Innengewinde sein. Alternativ kann das erste Verbindungsgewinde des ersten Bauteils ein Innengewinde sein und das komplementäre zweite Verbindungsgewinde des zweiten Bauteils ein Außengewinde sein.

Unabhängig davon, ob die Verschlussschraubenanordnung integral oder zweiteilig ausgebildet ist, ist diese dazu ausgelegt, mit dem Schaftabschnitt zugeordneten Außengewinde in ein Innengewinde einzugreifen. Das Innengewinde kann an dem Antreiber angeordnet sein, an dessen Außenumfangsfläche Ritzel der Mehrfachritzelanordnung angeordnet sind. Beim Eingreifen bzw. Einschrauben der Verschlussschraubenanordnung in den Antreiber weist das wenigstens eine daran aufgenommene Ritzel eine beliebige Winkelposition relativ zu an der Außenumfangsfläche der Mehrfachritzelanordnung angeordneten Ritzeln auf. Gerade bei hochpreisigen Fahrradschaltungen ist jedoch eine vorbestimmte Winkelpositionierung der Zahnformationen an den Ritzeln zueinander im montierten Zustand erstrebenswert, um leichtgängige und für den Fahrradfahrer kaum spürbare Schaltvorgänge der Fahrradkette zwischen den einzelnen Ritzeln und folglich eine möglichst kontinuierliche Drehmomentübertragung zu gewährleisten.

Im Allgemeinen erlauben Gewindeverbindungen keine exakte Winkelpositionierung der miteinander verschraubten Elemente zueinander, vor allem nicht bei in großen Stückzahlen hergestellten Produkten. Dazu kommt, dass in der Fahrradtechnik gelegentlich zur Wartung oder zu Reparaturzwecken die Komponenten voneinander gelöst werden, was eine exakte erneute Winkelpositionierung der einzelnen Gewindeverbindungen zueinander nach erneutem Zusammensetzen weiter erschwert. Bei der Gewindeverbindung der Verschlussschraubenanordnung mit dem Antreiber ist es daher gemäß einer Weiterbildung der Erfindung vorgesehen, dass die Winkelposition des kleinsten oder die zwei kleinsten an dem Schaftabschnitt aufgenommenen Ritzel unabhängig von der Gewindestellung einstellbar ist. Dies bedeutet, dass das kleinste oder die zwei kleinsten Ritzel relativ zum Schaftabschnitt der Verschlussschraubenanordnung drehbar sein können. Beispielsweise kann die Winkelposition des kleinsten Ritzels, bevorzugt der wenigstens zwei kleinsten Ritzel, relativ zu direkt mit dem Antreiber gekoppelten Ritzeln vor, bei oder nach dem Einschrauben der Verschlussschraubenanordnung in den Antreiber durch geeignete Festlegemittel festgelegt werden. Das Festlegemittel kann beispielsweise die von der Verschlussschraubenanordnung aufgenommenen Ritzel drehfest mit weiteren Ritzeln der Mehrfachritzel-Baugruppe koppeln. Beispielsweise kann das kleinste mit dem Antreiber gekoppelte Ritzel und das benachbarte von der Verschlussschraubenanordnung aufgenommnene nächst kleinere Ritzel jeweils einen Kragen mit Zähnen und Einkerbungen aufweisen, die ineinander eingreifen können und eine gewünschte Winkelposition der Ritzel zueinander festlegen können.

Um die Relativbewegung des wenigstens einen an dem Schaftabschnitt aufgenommenen Ritzels zu gewährleisten, ist in einer Ausführungsform der Erfindung der Außendurchmesser des dem Schaftabschnitt zugeordneten Außengewindes größer als ein Innendurchmesser des kleinsten Ritzels der Mehrfachritzelanordnung. Der Schaftabschnitt kann dazu eingerichtet sein, ein oder zwei Ritzel aufzunehmen, die einen Innendurchmesser von 27,0 mm bis 28,2 mm, bevorzugt von 27,2 +/- 0,2 mm, aufweisen. Alternativ kann der Schaftabschnitt dazu eingerichtet sein, ein Ritzel aufzunehmen, das einen Innendurchmesser von in etwa 24 mm aufweist. Ferner kann der Schaftabschnitt eine Stufe umfassen, sodass dieser zur Aufnahme zweier Ritzel geeignet ist, die den angegebenen größeren bzw. kleineren Innendurchmesser aufweisen. Ritzel mit den angegebenen Innendurchmessern sind geeignet, 10 bzw. 9 Zähne mit einem zum Eingreifen in die Fahrradkette geeignetem Abstand aufzuweisen.

Die beiden kleinsten Ritzel der Mehrfachritzelanordnung können im montierten Zustand integral miteinander verbunden sein. Auf diese Weise ist die Winkelpositionierung dieser beiden kleinsten Ritzel zueinander festgelegt. Die integrale Verbindung kann durch ein einteiliges Ausbilden der beiden kleinsten Ritzel oder durch ein Anformen der Ritzel aneinander erfolgen, wozu die vorangehend angesprochenen Verfahren zum Anformen verwendet werden können. Alternativ ist ein additives Fertigungsverfahren, beispielsweise ein 3D-Druckverfahren erfindungsgemäß möglich. Vorzugsweise ist zwischen den Ritzeln der Verbindungsabschnitt angeordnet. Beim Anformen entstehende Fügestellen können parallel oder orthogonal zur Drehachse der Mehrfachritzelanordnung verlaufen und angrenzend an den die beiden Ritzel verbindenden Verbindungsabschnitt angeordnet sein. In einer Weiterbildung der Erfindung können auch die drei kleinsten Ritzel der Mehrfachritzelanordnung im montierten Zustand integral miteinander verbunden sein. Fügestellen können im Bereich des Schaftabschnitts, zwischen Schaftabschnitt und zugeordnetem Außengewinde oder/und zwischen Schaftabschnitt und axial außenliegendem Anschlagabschnitt vorgesehen sein.

In einer alternativen Ausführung der Mehrfachritzelanordnung können die zwei oder drei kleinsten Ritzel der Mehrfachritzelanordnung lösbar miteinander verbunden sein und ineinandergreifende Zähne sowie zugeordnete Einkerbungen aufweisen. In einem Zustand, in dem die Zähne in Eingriff mit den zugeordneten Einkerbungen stehen, sind die Ritzel drehfest miteinander verbunden. Eine axiale Fixierung der lösbar miteinander verbundenen Ritzel erfolgt beispielsweise im montierten Zustand durch die Verbindung der Verschlussschraubenanordnung mit dem Antreiber.

Zur Montage der Verschlussschraubenanordnung an beispielsweise einem Antreiber kann die Verschlussschraubenanordnung eine radial innenliegende Werkzeugschnittstelle aufweisen, die einen drehmomentübertragenden Eingriff eines Werkzeugs ermöglicht. Ein Innendurchmesser der Werkzeugschnittstelle kann zwischen 22,6 mm und 23,6 mm sein, bevorzugt 21,6 +0,4/-0,6 mm sein.

Zur Bereitstellung der Mehrfachritzel-Baugruppe mit einer geringen axialen Länge kann das kleinste Ritzel der Mehrfachritzelanordnung an seiner axial äußeren Stirnseite eine radiale und axiale Aussparung aufweisen, die derart ausgebildet ist, dass der axial außenliegende Anschlagabschnitt in diese eingreifen kann. Stehen der axial außenliegende Anschlagabschnitt und die radiale und axiale Aussparung im montierten Zustand der Mehrfachritzel-Baugruppe in Eingriff miteinander, kann die Außenseitenfläche des kleinsten Ritzels axial weiter außen liegen als eine Stirnseite des axial außenliegenden Anschlagabschnitts. Alternativ kann die Außenseitenfläche des kleinsten Ritzels in einer Flucht mit der Stirnseite des axial außenliegenden Anschlagabschnitts liegen. Gemäß einer weiteren Alternative kann der axial außenliegende Anschlagabschnitt weniger als maximal 0,5 mm, bevorzugt weniger als 0,2 mm, axial nach außen von der Außenseitenfläche des kleinsten Ritzels hervorstehen. Es versteht sich, dass die vorstehenden Ausführungen gleichermaßen für alle Ausführungsformen des axial außenliegenden Anschlagabschnitts zutreffend sind.

In einer Weiterbildung der Erfindung kann im Bereich der Aussparung zwischen dem kleinsten Ritzel und der Verschlussschraubenanordnung ein Zwischenelement eingefügt sein, z.B. ein Blechring oder ein Kunststoffring, um die an Kontaktstellen auftretende Reibung zu verringern.

In einer weiteren Ausführungsform der Erfindung kann die Verschlussschraubenanordnung einteilig ausgeführt sein und als eine mit den an dem Schaftabschnitt aufgenommenen wenigstens einem Ritzel als 3D-gedrucktes Bauteil bereitgestellt sein. Auf diese Weise kann die Verschlussschraubenanordnung integral hergestellt sein und die Ritzel können radial außerhalb der Verschlussschraubenanordnung so gedruckt sein, dass diese im Bereich des Schaftabschnitts aufgenommen sind. D. h. die Verschlussschraubenanordnung und die daran aufgenommenen Ritzel können integral hergestellt sein. Es versteht sich, dass auch weitere Ritzel der Mehrfachritzelanordnung als 3D-gedrucktes Bauteil hergestellt sein können.

Gemäß einem weiteren Aspekt der Erfindung umfasst eine Hinterradbaugruppe für ein Fahrrad mit Kettenschaltung eine zwischen zwei gegenüberliegenden Rahmenabschnitten eines Fahrradrahmens anordenbare Hinterradnabe, einen drehbar mit der Hinterradnabe gekoppelten Antreiber und eine Mehrfachritzel-Baugruppe, die gemäß den vorstehenden Ausführungen ausgebildet ist. Die Mehrfachritzelanordnung der Mehrfachritzel-Baugruppe ist drehfest mit dem Antreiber gekoppelt oder koppelbar.

Bei dem Antreiber, an dem die Mehrfachritzel-Baugruppe gekoppelt oder koppelbar ist, kann es sich um einen Standardantreiber handeln, der im Stand der Technik bekannt ist und im Markt unter der Bezeichnung Hyperglide^{®} Antreiber oder abgekürzt als HG-Antreiber vertrieben wird. Die erfindungsgemäße Mehrfachritzel-Baugruppe kann also zusammen mit einem herkömmlichen Antreiber-Typ verwendet werden, der aufgrund seiner großen Fertigungszahlen und dessen weit verbreiteten Einsatz günstig und schnell verfügbar ist.

Im Folgenden sind mögliche Ausgestaltungen des Antreibers dargelegt. Der Antreiber kann an einem ersten Antreiber-Bereich seiner radialen Außenfläche ein Mitnehmerprofil aufweisen, das entlang einer ersten axialen Antreiber-Länge von dem Antreiberanschlag nach axial außen angeordnet ist. Die erste axiale Antreiber-Länge kann kleiner sein als eine zweite axiale Antreiber-Länge, die sich von dem Antreiberanschlag bis zur axial äußeren Stirnseite des Antreibers erstreckt. Der Antreiber kann an einem zweiten Antreiber-Bereich seiner radialen Außenfläche, der der axial äußeren Stirnseite des Antreibers benachbart ist, frei von Mitnehmerprofilen sein. Ferner kann der Antreiber eine Öffnung aufweisen, die sich von einer Antreiber-Mittelachse nach radial außen und von der axial äußeren Stirnseite des Antreibers nach axial innen erstreckt, wobei die Öffnung an ihrer radialen Innenfläche das Innengewinde aufweisen kann.

Charakteristische Abmessungen des Antreibers können folgendermaßen sein. Die erste axiale Antreiber-Länge des Antreibers von dem Antreiberanschlag bis zum Ende der Mitnehmerprofile kann größer als 32,9 mm sein und ist bevorzugt 33,2 +/-0,4 mm. Die zweite axiale Antreiber-Länge des Antreibers von dem Antreiberanschlag bis zu der axial äußeren Stirnseite des Antreibers kann größer als 34,2 mm sein und ist bevorzugt 34,9 +/- 0,3 mm. Ein erster Antreiber-Außendurchmesser des Antreibers im ersten Antreiber-Bereich entlang der ersten axialen Antreiber-Länge des Antreibers kann größer als 34,2 mm sein und ist bevorzugt 34,5 +/- 0,2 mm. Ein zweiter Antreiber-Außendurchmesser des Antreibers im zweiten Antreiber-Bereich, der der axial äußeren Stirnseite des Antreibers benachbart ist, kann größer als 31,4 mm sein und ist bevorzugt 32,1 +0,4/-0,2 mm. Ein erster Antreiber-Nenndurchmesser des Antreibers axial benachbart seiner axial äußeren Stirnseite kann größer als 29,8 mm sein und ist bevorzugt 30,6 +/- 0,2 mm.

Ferner kann die Mehrfachritzel-Baugruppe derart ausgebildet sein, dass im montierten Zustand eine erste Distanz in axialer Richtung von dem Antreiberanschlag bis zu der Außenseitenfläche des kleinsten Ritzels größer als 38,0 mm ist, bevorzugt größer als 39,1 mm ist, noch bevorzugter 39,9 +/- 0,2 mm ist. Zusätzlich oder alternativ kann eine zweite Distanz in axialer Richtung von der axial äußeren Stirnseite des Antreibers zu einer Außenseitenfläche des kleinsten Ritzels größer als 4,0 mm sein und ist bevorzugt 5,0 +/- 0,2 mm.

Mit der erfindungsgemäßen Verschlussschraubenanordnung kann die für den Einbau der Mehrfachritzel-Baugruppe zu Verfügung stehende Einbaubreite im Zusammenhang mit der Verwendung einer Mehrfachritzelanordnung mit einer möglichst großen Zähnezahl besonders vorteilhaft genutzt werden. Diese vorteilhafte Raumausnutzung spiegelt sich in den im Folgenden definierten ersten und zweiten Raumnutzfaktoren wieder, die Abmessungen des Antreibers mit denjenigen Abmessungen ins Verhältnis setzen, die sich durch die an dem Antreiber angebrachte Verschlussschraubenanordnung und dem wenigstens einem daran aufgenommenen Ritzel ergeben. Die zur Verfügung stehende Einbaubreite für alle an der Hinterradnabe zu befestigenden Komponenten beträgt mindestens 142 mm. Die Einbaubreite ist der Abstand von einer dem Rahmenabschnitt benachbarten Außenseite einer linken Nabenendkappe bis zu einer dem Rahmenabschnitt benachbarten Außenseite der rechten Nabenendkappe.

Der erste Raumnutzfaktor, der sich aus dem Verhältnis der zweiten Antreiber-Länge und der zweiten Distanz ergibt, kann in einem Bereich zwischen 5 und 10 liegen. Der zweite Raumnutzfaktor, der sich aus dem Verhältnis der ersten Antreiber-Länge und der zweiten Distanz ergibt, kann in einem Bereich zwischen 5 und 10 liegen.

Die Erfindung betrifft ferner ein Verfahren zur Montage einer Hinterradbaugruppe. Ein solches Verfahren zur Montage einer Hinterradbaugruppe kann die folgenden Schritte umfassen: den Schritt eines Verbindens von mindestens zwei Ritzeln mit den kleinsten Zähnezahlen einer Mehrfachritzelanordnung miteinander, den Schritt eines Verbindens der mindestens zwei verbundenen Ritzel mit einer Verschlussschraube, sodass die mindestens zwei Ritzel drehbar um eine Mittelachse der Verschlussschraube gelagert sind, den Schritt eines Befestigens der Verschlussschraube an einem Antreiber, indem ein Außengewinde der Verschlussschraubenanordnung in ein Innengewinde des Antreibers eingreift, den Schritt eines Ausrichtens der zwei verbundenen Ritzel gegenüber Ritzeln mit größeren Zähnezahlen, die mit einem Antreiber verbunden sind, und den Schritt eines Fixierens der zwei ausgerichteten verbundenen Ritzel an einem mit dem Antreiber verbundenen Ritzel durch Befestigungsmittel.

Sämtliche Merkmale der Mehrfachritzel-Baugruppe und der Hinterradbaugruppe der vorstehend erläuterten Erfindungsaspekte und Ausführungsformen können miteinander kombiniert werden.

### Figurenbeschreibung

Im Folgenden werden beispielhafte Ausführungsformen der Erfindung anhand der beigefügten schematischen Zeichnungen näher erläutert. Es stellen dar:
- Figur 1: eine perspektivische Ansicht auf eine zwischen zwei Rahmenabschnitten angeordnete Hinterradbaugruppe gemäß einer Ausführungsform der Erfindung und ein an einem der Rahmenabschnitte angeordnetes hinteres Schaltwerk;
- Figuren 2a-b: eine jeweilige Schnittansicht auf eine Hinterradbaugruppe gemäß einer Ausführungsform der Erfindung, die an einer zwischen zwei Rahmenabschnitten angebrachten Hinterradnabe befestigt ist;
- Figur 3: eine Schnittansicht durch eine an einem Rahmen befestigte Hinterradbaugruppe, die einen Ausschnitt der Mehrfachritzel-Baugruppe von Figuren 2a-b vergrößert zeigt;
- Figuren 4a-b: die Hinterradbaugruppe von Fig. 3 in einer Rückansicht (Figuren 4a) und einer Seitenansicht (Figur 4b);
- Figur 5: einen Querschnitt einer Verschlussschraubenanordnung der Mehrfachritzel-Baugruppe von Figur 3 mit dran angeordneten Ritzeln;
- Figur 6: eine Schnittansicht durch eine Verschlussschraubenanordnung der Mehrfachritzel-Baugruppe mit einer Verdeutlichung von Fügestellen gemäß einer Ausführungsform der Erfindung;
- Figuren 7a-e: Schnittansichten durch eine Mehrfachritzelanordnung mit einer jeweiligen Verdeutlichung von Fügestellen;
- Figuren 8a-c: Hinterradbaugruppen in verschiedenen Perspektiven, bei denen jeweils ein kleinstes Ritzel der Mehrfachritzelanordnung in Eingriff mit einer Fahrradkette steht;
- Figuren 9a-c: Schnittansichten der Mehrfachritzel-Baugruppe mit einer Verschlussschraubenanordnung gemäß einer weiteren Ausführungsform der Erfindung;
- Figuren 10a-b: eine Schnittansicht (Figur 10a) und eine Seitenansicht (Figur 10b) einer Mehrfachritzel-Baugruppe mit einer Verschlussschraubenanordnung gemäß einer weiteren Ausführungsform der Erfindung;
- Figuren 11a-b, 12a-b: Schnittansichten einer Hinterradbaugruppe in einem Zustand, in dem die Mehrfachritzel-Baugruppe gemäß einer Ausführungsform der Erfindung und der Antreiber aneinander angeordnet, jedoch nicht miteinander gekoppelt sind;
- Figuren 13a-d, 14a-b, 15: ein erstes und ein zweites Bauteil einer zweiteiligen Verschlussschraubenanordnung einer Mehrfachritzel-Baugruppe gemäß einer weiteren Ausführungsform der Erfindung;
- Figuren 16a-b: eine Querschnittsansicht (Figur 16a) und eine Seitenansicht (Figur 16b) auf ein Werkzeug in Eingriff mit dem zweiten Bauteil der zweiteiligen Verschlussschraubenanordnung der MehrfachritzelBaugruppe gemäß der in Figuren 13-15 dargestellten Ausführungsform der Erfindung;
- Figur 17: eine Querschnittsansicht auf ein Werkzeug in Eingriff mit der zweiteiligen Verschlussschraubenanordnung der Mehrfachritzel-Baugruppe gemäß der in Figuren 13-15 dargestellten Ausführungsform der Erfindung; und
- Figuren 18a-c: den Antreiber in einer Querschnittsansicht (Figur 18a), in einer Frontansicht (Figur 18b) und in einer perspektivischen Ansicht (Figur 18c).
- Figuren 19a-b: Ansichten gemäß einer weiteren Ausführungsform der Erfindung mit einer segmentierten Verschlussschraubenanordnung und Ritzel
- Figuren 20: weiteren Ausführungsform der Verschlussschraubenanordnung mit segmentiertem Gewinde und Ritzel
- Figuren 21a-b: Ansichten gemäß einer weiteren Ausführungsform mit umgeformter Verschlussschraube

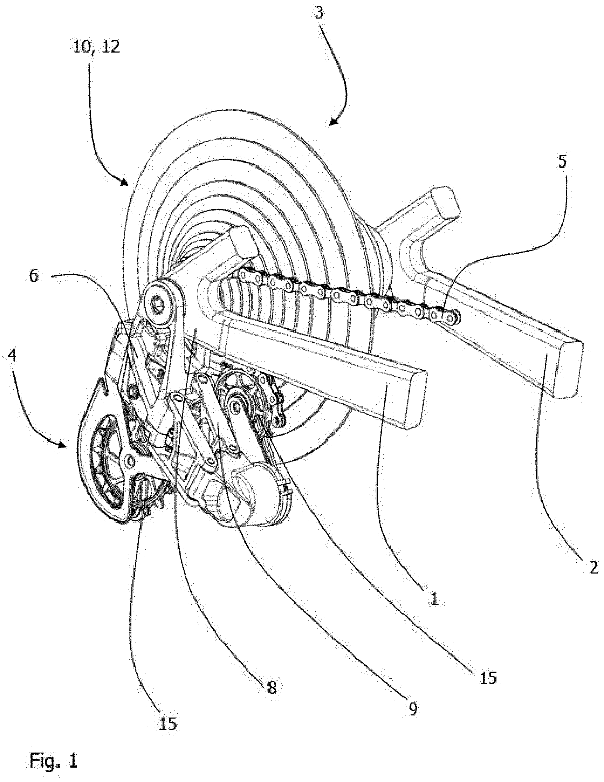

Figur 1 zeigt eine perspektivische Ansicht auf eine zwischen zwei Rahmenabschnitten 1, 2 angeordnete Hinterradbaugruppe 3 und ein an einem der Rahmenabschnitte 1 angeordnetes hinteres Schaltwerk 4 in Eingriff mit einer Fahrradkette 5. Ein B-Knuckle 6 zur Fixierung des hinteren Schaltwerks 4 umgreift ein Rahmenausfallende 8 des Rahmenabschnitts 1 und ist an diesem mittels einer Steckachse 7 fixiert, die in diesem Rahmenausfallende 8 sowie einem Rahmenausfallende des anderen Rahmenabschnitts 2 aufgenommen ist. An dem B-Knuckle 6 ist ein P-Knuckle 9 schwenkbar angebracht, wobei ein Schwenken des P-Knuckles 9 wenigstens dessen axiale Position gegenüber dem B-Knuckle 6 verändert.

Die Hinterradbaugruppe 3 umfasst eine Mehrfachritzel-Baugruppe 10, die wiederum eine Mehrfachritzelanordnung 12 und eine Verschlussschraubenanordnung 14 umfasst. Der Übersichtlichkeit halber sind in Figur 1 die Ritzel der Mehrfachritzelanordnung 12 lediglich schematisch unter Verdeutlichung der jeweiligen Außenumfänge der Ritzel dargestellt. In der Darstellung von Figur 1 steht die Fahrradkette 5, die von einem nicht dargestellten vorderen antreibenden Ritzel angetrieben wird, mit einem Ritzel der Mehrfachritzelanordnung 12 sowie mit zwei Kettenrollen 15 des hinteren Schaltwerks 4 in Eingriff. Es versteht sich, dass ein Schwenken des hinteren Schaltwerks 4, insbesondere des P-Knuckle 9, die Position der Fahrradkette 5 gegenüber den Ritzeln verändert, sodass die Fahrradkette 5 in ein benachbartes nächstes oder übernächstes Ritzel eingreifen kann.

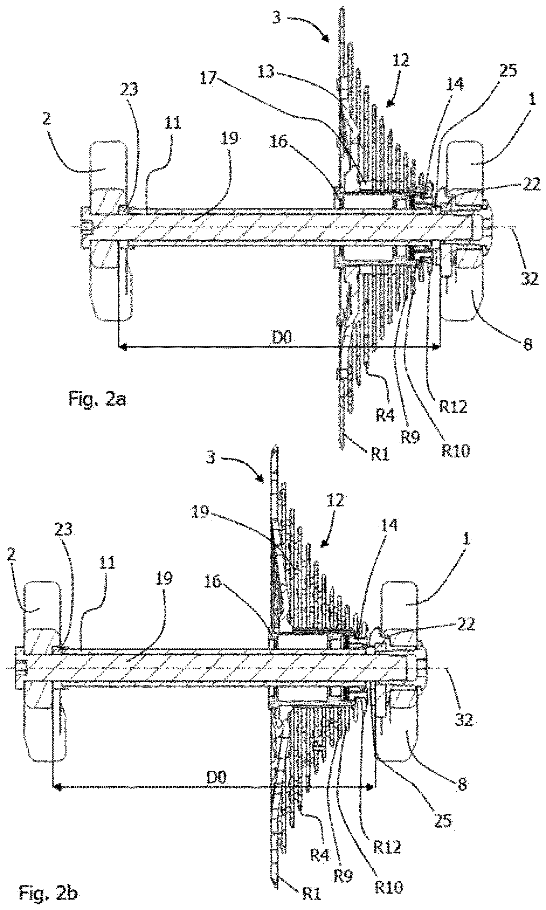

Figuren 2a-b zeigen die Mehrfachritzel-Baugruppe 10, die die Mehrfachritzelanordnung 12 und die Verschlussschraubenanordnung 14 umfasst. Die Mehrfachritzel-Baugruppe 10 ist mit einem Antreiber 16 verbunden und bildet mit diesem die Hinterradbaugruppe 3. Die Hinterradbaugruppe 3 ist auf einer Hinterradnabe 11 angeordnet, die zwischen den zwei gegenüberliegenden Rahmenabschnitten 1, 2 verläuft und mittels einer Hinterradachse 19 an den Rahmenabschnitten 1, 2 befestigt oder befestigbar ist. Zwischen dem Rahmenabschnitt 1 und der Hinterradbaugruppe 3 ist ein Schaltauge 22 angeordnet, das zur Montage des hinteren Schaltwerks 4 dient und durch welches die Hinterradnabe 11 verläuft.

Die Mehrfachritzelanordnung 12 ist mit zwölf Ritzeln R1-R12 dargestellt. Figur 2a zeigt eine Mehrfachritzelanordnung 12, bei der die vier größten Ritzel R1-R4 mit einem Spider 13 verbunden sind, so dass das Drehmoment über den Spider 13 auf den Antreiber 16 übertragen wird. Bei dieser platzsparenden Ausführung sind die vier größten Ritzel radial von dem Antreiber 16 beabstandet. Die sechs mittleren Ritzel R4-R9 sind jeweils mit Spacern 17 axial voneinander beabstandet und greifen direkt drehmomentübertragend in den Antreiber 16 ein. Die beiden kleinsten Ritzel R11, R12 sind mit der Verschlussschraubenanordnung 14 über das drittkleinste Ritzel R10 drehmomentübertragend verbunden.

Figur 2b zeigt eine alternative Mehrfachritzelanordnung 12, bei der die Ritzel mit Pins/Bolzen 19 miteinander verbunden sind. Nur das größte Ritzel R1 ist drehmomentübertragend mit dem Antreiber 16 verbunden, reicht also radial bis zum Antreiber 16. Die übrigen Ritzel R2-R12 sind radial von dem Antreiber 16 beabstandet. Die drei kleinsten Ritzel sind einstückig ausgebildet, z.B. geschweißt, und über das drittkleinste Ritzel R10 mit dem Antreiber 16 drehmomentübertragend verbunden, und über die Verschlussschraubenanordnung 14 axial fixiert.

Ferner zeigen Figuren 2a-b die für die an der Hinterradnabe 11 zu befestigenden Komponenten zur Verfügung stehende Einbaubreite D0, die mindestens 142 mm beträgt. Die Einbaubreite ist der Abstand von einer dem Rahmenabschnitt 2 benachbarten Außenseite einer linken Nabenendkappe 23 bis zu einer dem Rahmenabschnitt 1 benachbarten Außenseite der rechten Nabenendkappe 25.

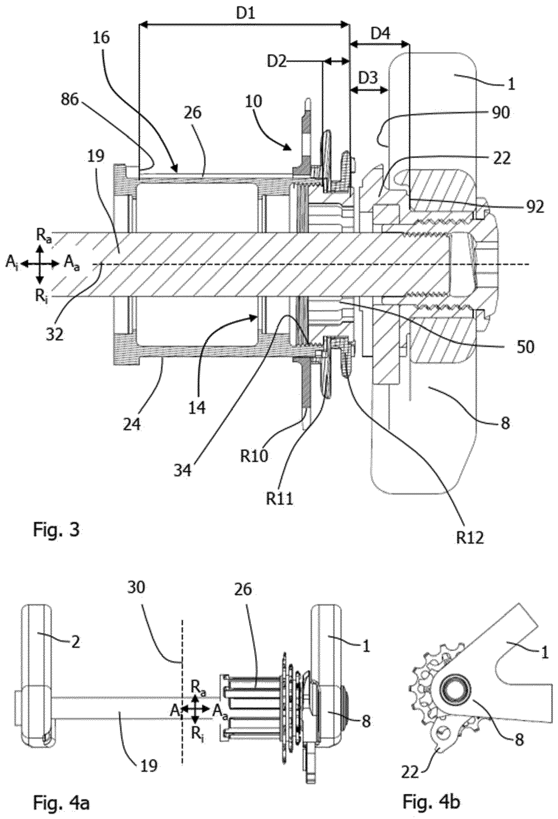

In beiden alternativen Ausführungen der Mehrfachritzelanordnung ist das drittkleinste Ritzel R10 an einer Außenumfangsfläche 24 des Antreibers 16 angeordnet und radial an dem Antreiber 16 abgestützt. Zudem greift das drittkleinste Ritzel R10 in ein an der Außenumfangsfläche 24 des Antreibers 16 angeordnetes Mitnehmerprofil 26 ein, wodurch das drittkleinste Ritzel R10 drehfest mit dem Antreiber 16 gekoppelt ist. Die zwei kleinsten Ritzel R11, R12 sind zumindest teilweise axial außerhalb des Antreibers 16 und benachbart zu dem drittkleinsten Ritzel R10 angeordnet. Eine vergrößerte Ansicht der drei kleinsten Ritzel R10-R12, die an dem Antreiber 16 angebracht und durch die Verschlussschraubenanordnung 14 axial fixiert, ist in Figur 3 dargestellt.

In dieser Anmeldung verwendete axiale Richtungsangaben beziehen sich auf die Fahrradmittelebene 30 und die Rahmenabschnitte 1, 2, wie in Figur 4a ersichtlich. Eine Richtung nach axial innen Aᵢ ist definiert als die Richtung von einem der Rahmenabschnitte 1, 2 zu der Fahrradmittelebene 30 hin, wohingegen eine Richtung nach axial außen Aₐ definiert ist als die Richtung von der Fahrradmittelebene zu dem Rahmenabschnitt 1 hin. Die axialen Richtungen Rᵢ und Rₐ sind folglich entgegengesetzt zueinander. Wird hingegen von einer Richtung nach radial außen Rₐ gesprochen, dann ist dies eine Richtung, die orthogonal zu einer Drehachse 32 der Mehrfachritzelanordnung 12 verläuft und von dieser weg weist. Eine Richtung nach radial innen Rᵢ ist der Richtung nach radial außen Rₐ entgegengesetzt und ist eine Richtung zu der Drehachse 32 der Mehrfachritzelanordnung 12 hin. Die Drehachse 32 der Mehrfachritzelanordnung 3 verläuft parallel zu der Hinterradnabe und fällt mit einer Dreh- bzw. Längsachse der Hinterradnabe zusammen. Die angesprochenen Richtungsangaben sind in Figur 3 dargestellt.

Die in Figur 3 dargestellte an dem Rahmenabschnitt 1 angeordnete Hinterradbaugruppe 3 ist in Figur 4a als Rückansicht und in Figur 4b als Seitenansicht dargestellt. Wie am besten in Figur 4b ersichtlich, erfolgt die Anbringung der Hinterradbaugruppe 3 an einem Rahmenausfallende 8 des Rahmenabschnitts 1 des Fahrradrahmens.

Der Antreiber 16 weist an seiner im montierten Zustand axial äußeren Seite eine Öffnung auf, in der ein Innengewinde 34 angeordnet ist. Die Verschlussschraubenanordnung 14 kann in das Innengewinde 34 eingreifen.

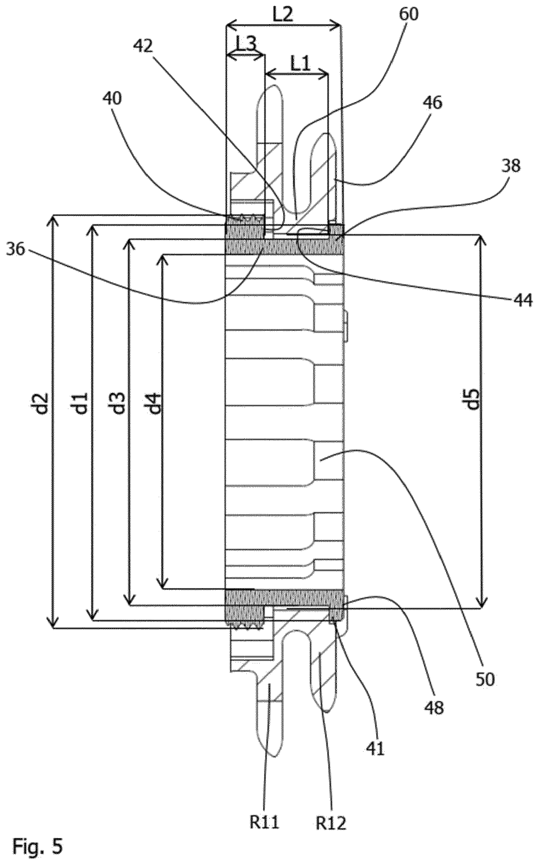

Eine Detailansicht der Verschlussschraubenanordnung 14 gemäß einer Ausführungsform der Erfindung mit daran aufgenommenen wenigstens zwei kleinsten Ritzeln R11, R12 ist in Figur 5 dargestellt. Die Aufnahme der wenigstens zwei kleinsten Ritzel R11, R12 erfolgt an einem Schaftabschnitt 36. Der Schaftabschnitt 36 ist an seinem einen Endbereich mit einem axial außenliegenden Anschlagabschnitt 38 versehen. An dem entgegengesetzten Endbereich des Schaftabschnitts 36 ist ein dem Schaftabschnitt zugeordnetes Außengewinde 40 angeordnet. Das Außengewinde 40 der Verschlussschraubenanordnung kann in das Innengewinde 34 des Antreibers 16 eingreifen. Das Außengewinde 40 dient dann als durchmesservermittelndes Ringelement zwischen dem Antreiber 16 und dem Schaftabschnitt 36. Es ist daher im montierten Zustand der Hinterradbaugruppe 3 axial innerhalb des Innengewindes 34 des Antreibers 16 und benachbart zu dem Schaftabschnitt 36 der Verschlussschraubenanordnung 14 angeordnet. Der Außendurchmesser d1 des Anschlagabschnitts 38 und der Außendurchmesser d2 des Außengewindes 40 sind größer als ein Außendurchmesser d3 des Schaftabschnitts 36 in demjenigen Bereich, der zur Aufnahme des wenigstens einen der wenigstens zwei kleinsten Ritzel R11, R12 vorgesehen ist. Es ergibt sich somit eine Verschlussschraubenanordnung 14 mit einem Hinterschnitt.

Der Außendurchmesser d2 des dem Schaftabschnitt zugeordneten Außengewindes 40 kann zwischen 30,1 mm und 30,6 mm sein, bevorzugt 30,5 +/- 0,2 mm sein. Der Außendurchmesser d3 des Schaftabschnitts 36 in demjenigen Bereich, in dem das wenigstens eine der wenigstens zwei kleinsten Ritzel R11, R12 aufgenommen ist, kann zwischen 26,0 mm und 27,5 mm sein, bevorzugt 26,8 +/- 0,2 mm sein oder alternativ in etwa 24 mm sein. In einer nicht dargestellten Ausführungsvariante kann der Schaftabschnitt eine Stufe umfassen, sodass dieser einen jeweiligen Bereich mit den angegebenen alternativen Innendurchmessern aufweist.

Der Hinterschnitt zwischen einer Innenseitenfläche 42 des dem Schaftabschnitt zugeordneten Außengewindes 40 und einer Innenseitenfläche 44 des Anschlagabschnitts 38 weist eine axiale Länge L1 zwischen 3,2 mm und 5,0 mm auf. Eine axiale Länge L2 der Verschlussschraubenanordnung 14 ist beispielsweise zwischen 7,5 mm und 10,3 mm, bevorzugt 9,0 +/- 0,2 mm. Um sicherzustellen, dass eine hinreichende axiale Vorspannung auf der Mehrfachritzelanordnung zum Übertragen von Lasten vorliegt, kann eine axiale Länge L3 des dem Schaftabschnitt zugeordneten Außengewindes 40 zwischen 2,5 mm und 3,5 mm sein, bevorzugt 3,0 +/- 0,2 mm sein.

In dem in Figur 5 dargestellten Ausführungsbeispiel nimmt der Schaftabschnitt 36 die zwei kleinsten Ritzel R11, R12 der Mehrfachritzelanordnung 12 auf. Die wenigstens zwei kleinsten Ritzel R11, R12 sind radial freitragend ausgeführt, es besteht also in radialer Richtung ein Abstand zwischen dem Schaftabschnitt 36 und den zwei kleinsten Ritzeln R11, R12. Die radial freitragende Ausführung der wenigstens zwei kleinsten Ritzel R11, R12 wird dadurch erreicht, dass diese miteinander und mit einem benachbarten größeren Ritzel R10 verbunden sind, beispielsweise mittels eines Fügeverfahrens oder durch einen Verrastmechanismus. Beispielsweise weist das kleinste mit dem Antreiber gekoppelte Ritzel R10 und das benachbarte an der Verschlussschraubenanordnung aufgenommene nächst kleinere Ritzel R11 jeweils einen Kragen mit Zähnen und Einkerbungen auf, die ineinander eingreifen können und eine gewünschte Winkelposition der Ritzel zueinander festlegen können.

Das kleinste Ritzel R12 liegt mit einem axial äußeren Bereich an dem Anschlagabschnitt 38 an, sodass im montierten Zustand der Hinterradbaugruppe 3 eine axiale Fixierung der Mehrfachritzelanordnung 12 erfolgt. Für eine besonders platzsparende Ausführung weist das kleinste Ritzel R12 eine Aussparung 41 nach radial innen und axial außen auf, in die der Anschlagabschnitt 38 eingreift. Der Eingriff kann beispielsweise derart sein, dass der Anschlagabschnitt 38 zumindest teilweise in der Aussparung 41 aufgenommen ist, wie in Figur 5 dargestellt. In einer alternativen Ausführungsform kann eine Außenseitenfläche 46 des kleinsten Ritzels R12 mit einer Stirnfläche 48 des Anschlagabschnitts 38 zusammenfallen.

Zur Montage der Hinterradbaugruppe 3 wird die Verschlussschraubenanordnung 14 mit ihrem Außengewinde 40 in das Innengewinde 34 des Antreibers 16 geschraubt. Die dazu notwendige Drehkraft kann mit Hilfe eines Werkzeugs auf die Verschlussschraubenanordnung 14 übertragen werden. Dazu weist die Verschlussschraubenanordnung 14 eine Werkzeugschnittstelle 50 an einer Innenumfangsfläche auf, in die das Werkzeug drehmomentübertragend eingreifen kann.

Die Innenumfangsfläche der Verschlussschraubenanordnung 14 kann einen Innendurchmesser d4 des Schaftabschnitts 36 festlegen, der zwischen 23,8 mm und 25,0 mm ist, bevorzugt 24,0 +/- 0,2 mm ist. Der Innendurchmesser d5 des kleinsten an der Verschlussschraubenanordnung 14 aufgenommenen Ritzels R12 ist größer als der Außendurchmesser d3 des Schaftabschnitts 36, sodass sich die Verschlussschraubenanordnung 14 relativ zu den daran aufgenommenen Ritzeln drehen kann.

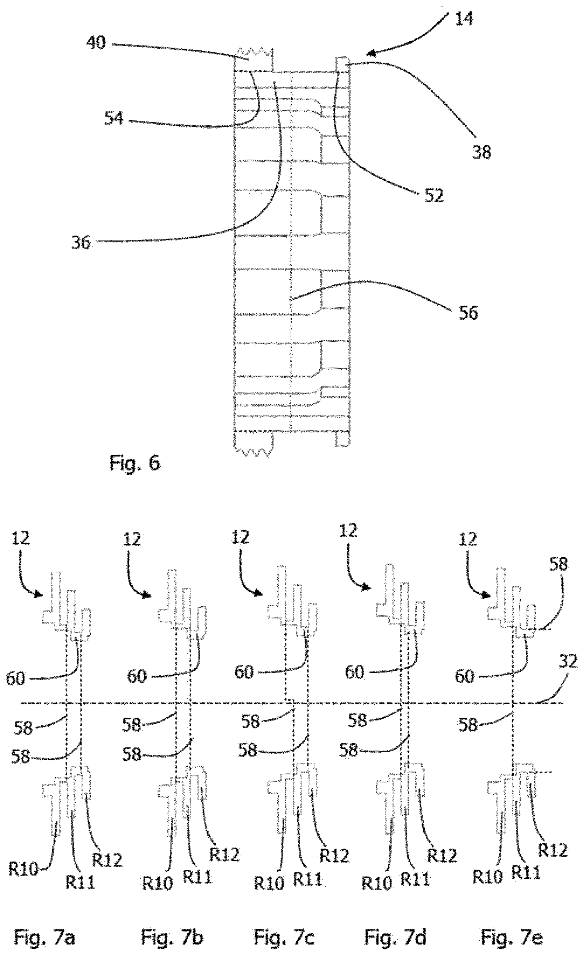

Zur Aufnahme wenigstens eines der zwei kleinsten Ritzel R11, R12 im Bereich des Hinterschnitts der Verschlussschraubenanordnung 14 ist diese gemäß einer Ausführungsform mit Fügestellen versehen. Mögliche Fügestellen 52, 54, 56 der Verschlussschraubenanordnung 14 sind in Figur 6 dargestellt. Diese befinden sich zwischen dem Schaftabschnitt 36 und dem axial außenliegenden Anschlagabschnitt 38, im Bereich zwischen dem Schaftabschnitt 56 und den zugeordneten Außengewinde 40 oder/und im Bereich des Schaftabschnitts 36. Die Verschlussschraubenanordnung 14 weist wenigstens eine dieser Fügestellen 52, 54, 56 auf. Bei der Montage der Mehrfachritzel-Baugruppe 10 können die Ritzel R11, R12 im Bereich des Schaftabschnitts 38 aufgenommen werden, bevor die Verschlussschraubenanordnung 14 an wenigstens einer der Fügestellen 52, 54, 56 angefügt wird.

In einer Ausführungsform können die Ritzel R10, R11, R12 mittels Fügestellen 58 miteinander verbunden sein. Figuren 7a-e zeigen mögliche Fügestellen 58 zwischen den drei kleinsten Ritzeln R10, R11, R12. Die Fügestellen 58 befinden sich angrenzend an einen Verbindungsabschnitt 60, der zwischen zwei benachbarten Ritzeln angeordnet ist und deren Abstand voneinander definiert. Beispielsweise ist das kleinste Ritzel R12 an einen Verbindungsabschnitt 60 zwischen dem kleinsten und dem zweitkleinsten Ritzel R12, R11 angefügt, siehe Figur 7a. Alternativ kann das zweitkleinste Ritzel R11 einteilig mit zwei entgegengesetzten Verbindungsabschnitten 60 ausgebildet sein und das kleinste Ritzel R12 kann an einen der Verbindungsabschnitte 60 angefügt sein, siehe Figur 7c. Alternativ kann das kleinste Ritzel R12 einteilig mit einem Verbindungsabschnitt 60 ausgebildet sein und das zweitkleinste Ritzel R11 kann an den Verbindungsabschnitt 60 des kleinsten Ritzels R12 angefügt sein, siehe Figur 7d. Wie in Figur 7e ersichtlich, kann die Fügestelle 58 parallel oder orthogonal zur Drehachse 32 der Mehrfachritzelanordnung 12 verlaufen. Wie in Figur 7c ersichtlich, kann die Fügestelle 58 einen axialen Versatz aufweisen.

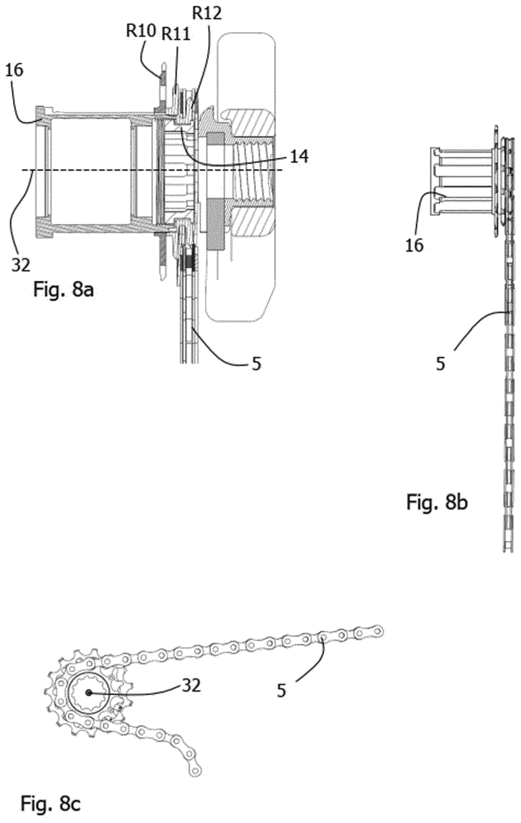

Figuren 8a-c zeigen jeweils das an der Verschlussschraubenanordnung 14 aufgenommene kleinste Ritzel R12 in Eingriff mit einer Fahrradkette 5. Die Fahrradkette 5 wird über ein nicht dargestelltes vorderes Kettenblatt angetrieben und kann eine

Drehung der Mehrfachritzelanordnung 12 um dessen Drehachse 32 bewirken. Das auf das kleinste Ritzel R12 durch die Fahrradkette 5 übertragene Drehmoment wird von dem kleinsten Ritzel R12 auf wenigstens ein größeres Ritzel R10 übertragen, das drehmomentübertragend mit dem Antreiber 16 verbunden ist. Zur Drehmomentübertragung zwischen den Ritzeln R10, R11, R12 tragen auch die zwischen den Ritzeln angeordneten Verbindungsabschnitte 60, 64 bei. Im Bereich der Verbindungsabschnitte 60, 64 können Verrastmechanismen, wie ineinandergreifende Zähne und Einkerbungen, zur Drehmomentübertragung vorgesehen sein.

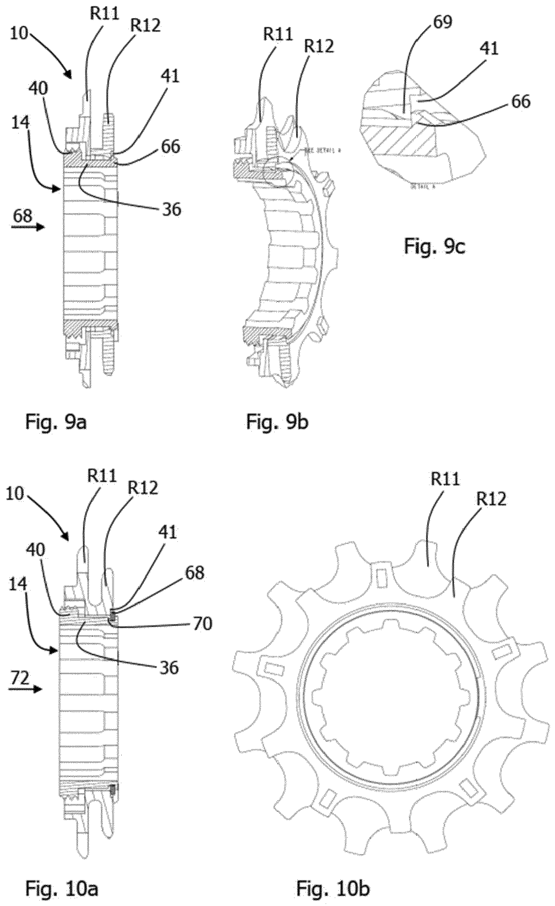

Figuren 9a-c zeigen eine alternative Ausführungsform der Verschlussschraubenanordnung 14, bei der der axial außenliegende Anschlagabschnitt 38 durch eine Mehrzahl von Schnapphaken 66 ausgebildet ist. Die Schnapphaken 66 sind über den äußeren Umfang der Verschlussschraubenanordnung 14 verteilt und voneinander beabstandet. Diese Ausführungsform ermöglicht eine integrale Ausbildung der Verschlussschraubenanordnung 14. Es kann also auf Fügestellen verzichtet werden.

Dazu haben die Schnapphaken 66 und gegebenenfalls der Schaftabschnitt 36 eine derartige Elastizität, dass die Verschlussschraubenanordnung 14 über die in der in Figur 9a gekennzeichneten Richtung 68 in die aufzunehmenden Ritzel geschoben werden kann, bis die Aussparung 41 des kleinsten Ritzels R12 in Eingriff mit den Schnapphaken 66 gelangt, wie in Figur 9c dargestellt. In der dargestellten Ausführung ist die Aussparung 41 durch einen nach radial innen vorstehenden Vorsprung 69 an dem kleinsten Ritzel R12 vergrößert.

Figuren 10a-b zeigen eine alternative Ausführungsform der Verschlussschraubenanordnung 14, bei der der axial außenliegende Anschlagabschnitt 38 durch ein Sicherungselement 68 ausgebildet ist, beispielsweise als Ringelement. Das Sicherungselement 68 greift sowohl in die Aussparung 41 des kleinsten Ritzels R12 als auch in eine in dem Endbereich des Schaftabschnitts 36 ausgebildete Nut 70 ein.

Auf diese Weise stellt das Sicherungselement 68 eine axiale Fixierung der an dem Schaftabschnitt aufgenommenen Ritzel dar. Bei der Montage der Mehrfachritzel-Baugruppe 10 wird die Verschlussschraubenanordnung in die aufzunehmenden Ritzel R12, R11 in Richtung des Pfeils 72 geschoben bis diese im Bereich des Schaftabschnitts angeordnet sind. Im Anschluss wird das Sicherungselement 68 in Eingriff mit der Aussparung 41 und der Nut 70 gebracht.

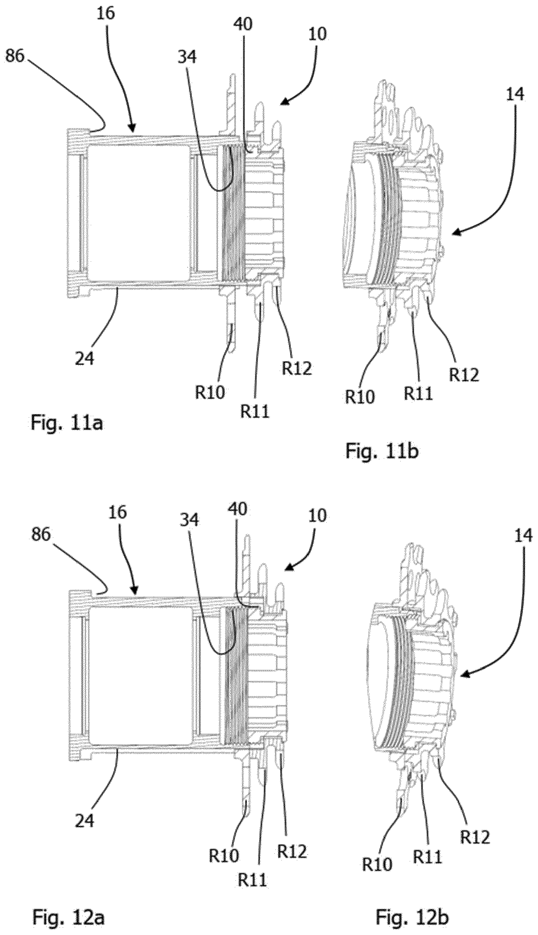

Figuren 11a-b und 12a-b zeigen jeweils eine Schnittansicht der Hinterradbaugruppe 3 in einem Zustand, in dem die Mehrfachritzel-Baugruppe 10 und der Antreiber 16 aneinander angeordnet, jedoch nicht miteinander gekoppelt sind. Bei der in Figuren 11a-b gezeigten Ausführungsform der Mehrfachritzelanordnung 12 sind zwei kleinste Ritzel R11, R12 miteinander verbunden und relativ gegenüber der Verschlussschraubenanordnung drehbar. Eine gewünschte Winkelpositionierung der an dem Schaftabschnitt aufgenommenen Ritzel R11, R12 relativ zu einem weiteren Ritzel R10, das drehfest mit dem Antreiber 16 gekoppelt ist, kann beim oder nach dem Einschrauben der Verschlussschraubenanordnung 14 in den Antreiber 16 erfolgen. Dies ist möglich, da die an dem Schaftabschnitt aufgenommenen Ritzel R12, R11 radial freitragend ausgeführt sind, d. h. sich nicht an diesem radial abstützen, und sich relativ zu der Verschlussschraubenanordnung 14 drehen können. Die radiale Fixierung der zwei kleinsten Ritzel R12, R11 kann mittels eines Verrastmechanismus erfolgen, beispielsweise ist eine Raststruktur mit Zähnen und Einkerbungen zwischen dem zweitkleinsten und dem drittkleinsten Ritzel vorgesehen. Alternativ kann ein anderes Fügeverfahren zur Verbindung gewählt werden als eine Verrastung. Die vorstehende Ausführungsform ist in Bezug auf die Herstellungskosten der Mehrfachritzelanordnung optimiert.

Bei der in Figuren 12a-b dargestellten Ausführungsform sind die zwei an dem Schaftabschnitt aufgenommenen kleinsten Ritzel R12, R11 mit dem drittkleinsten Ritzel R10 verbunden. D.h. die Winkelpositionen der drei kleinsten Ritzel relativ zueinander sind bereits vor dem Einschrauben der Verschlussschraubenanordnung 14 in den Antreiber 16 festgelegt. Während des Einschraubens der Verschlussschraubenanordnung 14 in den Antreiber 16 kann die Winkelposition der drei kleinsten Ritzel so angepasst werden, dass das drittkleinste Ritzel R10 in das Mitnehmerprofil 26 des Antreibers 16 eingreifen kann, wodurch die gewünschte Winkelposition der drei kleinsten Ritzel in Bezug auf weitere Ritzel der Mehrfachritzelanordnung 12 festgelegt ist. Die vorstehende Ausführungsform bietet eine einfache Montage der über die Verschlussschraubenanordnung anzubringenden Ritzel der Mehrfachritzelanordnung.

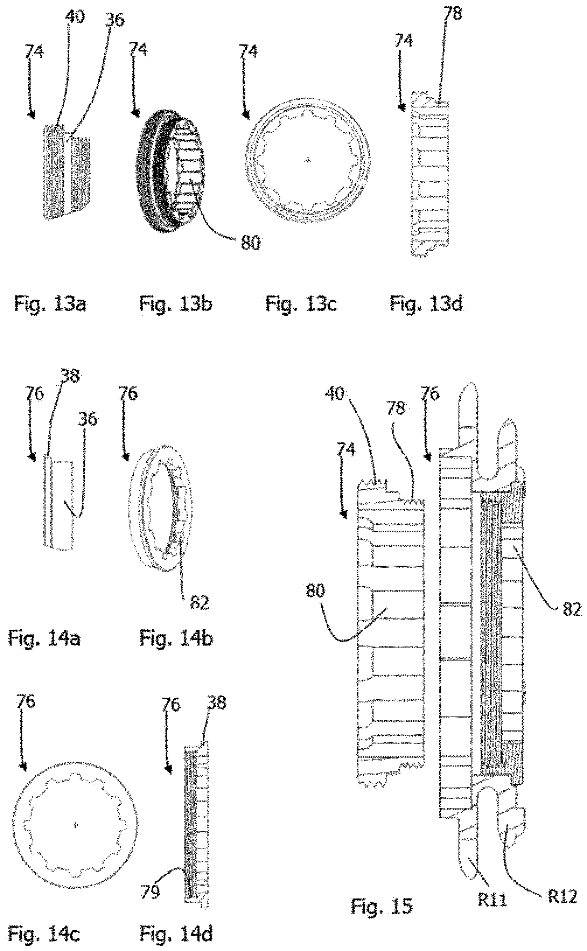

Im Folgenden wird eine Ausführungsform beschrieben, bei der die Verschlussschraubenanordnung 14 zweiteilig ausgeführt ist und ein erstes sowie ein zweites Bauteil 74, 76 umfasst. Die zwei Bauteile 74, 76 sind voneinander trennbar. Die zwei in Figuren 13a-d und 14a-d dargestellten Bauteile 74, 76 werden mittels ineinandergreifender Verbindungsgewinde 78, 79, die im Bereich des Schaftabschnitts 36 angeordnet sind, miteinander verbunden. Das dem Schaftabschnitt zugeordnete Außengewinde 40 ist an dem ersten Bauteil 74 und der axial außenliegende Anschlagabschnitt 38 ist an dem zweiten Bauteil 76 angeordnet. Die zwei Bauteile 74, 76 weisen eine jeweilige Werkzeugschnittstelle 80, 82 auf, die ein Eingreifen des gleichen Werkzeugs 83 ermöglichen. Die Werkzeugschnittstellen 80, 82 sind radial innen an einer Innenumfangsfläche des ersten bzw. zweiten Bauteils angeordnet. Figur 15 zeigt die zweiteilige Verschlussschraubenanordnung 14 mit deren zwei Bauteilen 74, 76 auf einer gemeinsamen Achse.

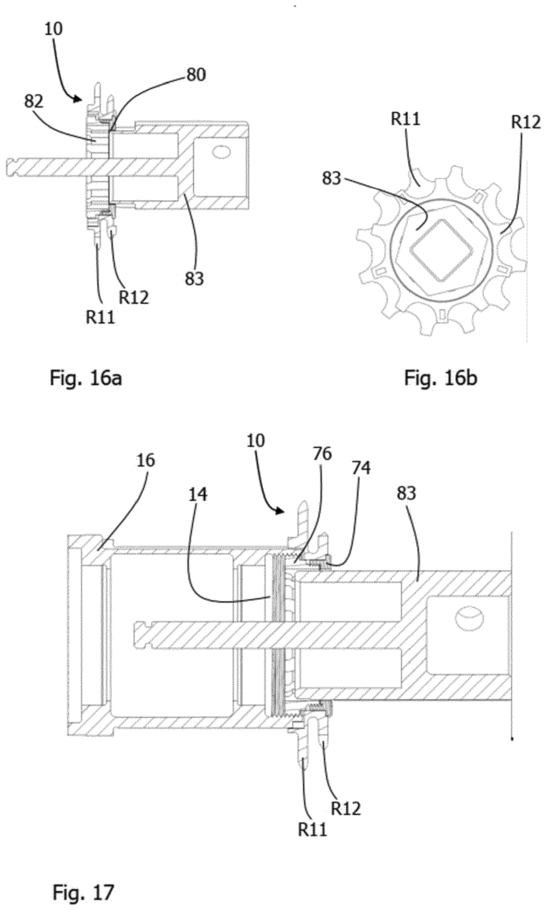

Zur Montage der Mehrfachritzel-Baugruppe 10 mit der zweiteiligen Verschlussschraubenanordnung 14 greift das Werkzeug 83 wahlweise in eines der zwei Bauteile 74, 76, siehe Figur 16a-b, oder beide Bauteile 74, 76, siehe Figur 17, ein. Es kann zunächst das erste Bauteil 74 in den Antreiber 16 geschraubt werden und das zweite Bauteil 76 im Anschluss in das erste Bauteil 74 geschraubt werden. Das erste Bauteil 74 wirkt bei dieser Anordnung als durchmesservermittelndes Ringelement. Alternativ können zunächst die zwei Bauteile 74, 76 miteinander verbunden werden, bevor diese in den Antreiber 16 geschraubt werden. In beiden Fällen wird vor dem Verschrauben der zwei Bauteile 74, 76 das wenigstens eine aufzunehmende kleinste Ritzel R12, R11 im Bereich des Schaftabschnitts 36 eines der zwei Bauteile 74, 76 aufgenommen. Bei der Montage können zunächst die zwei Bauteile 74, 76 bis zum Anschlag miteinander verschraubt werden. Im Anschluss kann eines der Bauteile 74, 76 so weit zurückgedreht werden bis die Werkzeugschnittstellen 80, 82 der zwei Bauteile 74, 76 miteinander fluchten. Bei hinreichend Eingriffspunkten des Werkzeugs und einem feinen Gewinde 78, 79 sollte das Zurückdrehen einen geringen axialen Versatz ausmachen, bei 12 Eingriffspunkten beträgt der Winkel beispielsweise etwa 29°.

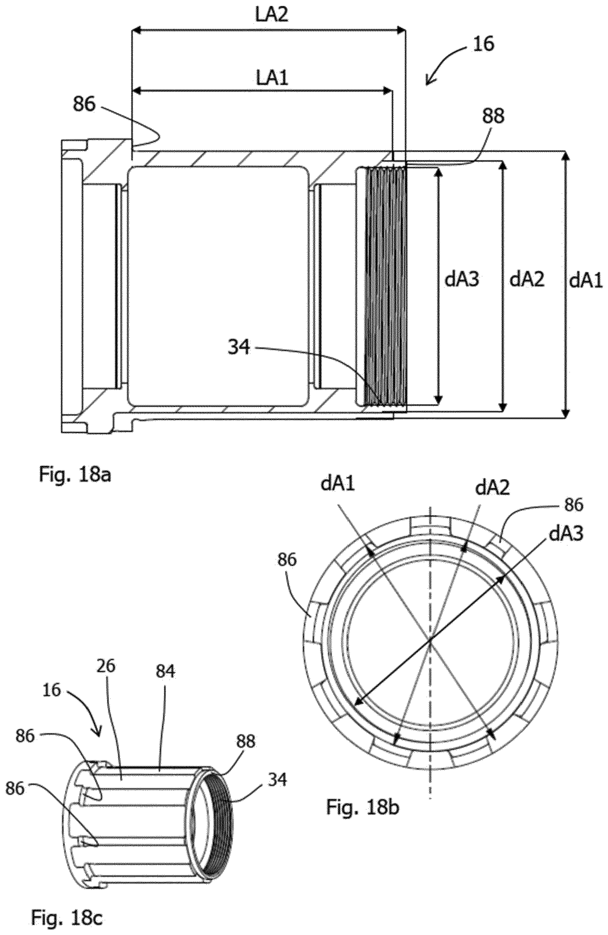

Die Mehrfachritzel-Baugruppe 10 ist mit einem Antreiber 16 gekoppelt oder koppelbar. Der Antreiber 16, der in Fachkreisen aufgrund seiner weiten Verbreitung auch als "Standardantreiber" bezeichnet wird, ist in Figuren 18a-c als separates Bauteil unter Kennzeichnung ausgewählter charakteristischer Abmessungen dargestellt. Er weist auf seiner radial äußeren Umfangsfläche das Mitnehmerprofil 26 auf, das sich von einer Antreiber-Basisfläche nach radial außen erstreckt. Das Mitnehmerprofil 26 umfasst Mitnehmervorsprünge oder sogenannte Splines 84. Wenigstens einer der Splines 84 unterscheidet sich in seinen Abmessungen von den übrigen Splines des Mitnehmerprofils 26. In der Regel weisen an dem Antreiber 16 zu befestigende Ritzel eine Innenkontur auf, die zu dem Mitnehmerprofil 26 des Antreibers 16 komplementär ausgebildet sind. Auf diese Weise können Ritzel mit entsprechender Innenkontur und der Antreiber 16 drehmomentübertragend in Eingriff gelangen. Beispielsweise ist die Anzahl der Splines größer oder gleich 8, bevorzugt größer oder gleich 9. Ebenfalls kann die Anzahl der Splines kleiner als oder gleich 22 sein.

Der Antreiber 16 weist das Mitnehmerprofil 26 an einem ersten Bereich seiner radialen Außenfläche auf, der sich entlang einer ersten axialen Länge LA1 von einem Antreiberanschlag 86 nach axial außen Aₐ erstreckt. Als Antreiberanschlag 86 wird allgemein ein Abschnitt des Antreibers 16 bezeichnet, an dem die daran befestigte Mehrfachritzelanordnung 12 anschlägt und durch den die Position der Mehrfachritzelanordnung 12 gegenüber dem Antreiber 16 festlegbar ist. Diese erste axiale Länge LA1 des Antreibers 16 ist vorzugsweise größer als 32,9 mm, bevorzugt 33,2 +/-0,4 mm. Ein Außendurchmesser dA1 in diesem ersten Bereich, gemessen an radialen Außenflächen des Mitnehmerprofils 26 ist beispielsweise größer als 34,2 mm, bevorzugt 34,5 +/- 0,15 mm.

Wie in Figuren 18a-c ersichtlich, schließt sich an den ersten Bereich mit dem Mitnehmerprofil 26 ein relativ kurzer zweiter Bereich an, bei dem die radiale Außenfläche des Antreibers 16 frei von dem Mitnehmerprofil und damit glatt ist. Eine zweite axiale Länge LA2 des Antreibers 16 erstreckt sich von dem Antreiberanschlag 86 bis zu einer axial äußeren Stirnseite 88 des Antreibers 16 und ist zwischen 33,9 mm und 35,9 mm, jedoch bevorzugt 34,9 +/- 0,3 mm. Ein Außendurchmesser dA2 des zweiten Bereichs kann größer als 31,4 mm sein und ist bevorzugt 32,1 +0,4/-0,2 mm.

Ferner weist der Antreiber 16 benachbart zu seiner axial äußeren Stirnseite 88 das nach radial innen weisende Innengewinde 34 auf. Das Innengewinde 34 hat vorzugsweise einen Nenndurchmesser dA3 größer als 29,8 mm und bevorzugt von in etwa 30,6 mm. Eine bevorzugte Steigung des Innengewindes des Antreibers ist 24 TPI, sodass das Gewinde auch nach bekannter Bemaßung als M 30,6 x 24 TPI charakterisiert werden kann.

Die sich ergebenden charakteristischen Abmessungen im montierten Zustand der Hinterradbaugruppe 3 zwischen den zwei gegenüberliegenden Rahmenabschnitten 1, 2 bei Verwendung der Mehrfachritzel-Baugruppe 10 mit dem Antreiber 16 werden in Bezug auf Figur 3 erläutert. In diesem montierten Zustand ist eine erste Distanz D1 in axialer Richtung von dem Antreiberanschlag 86 bis zu der Außenseitenfläche 46 des kleinsten Ritzels R12 größer als 38 mm, beispielsweise größer als 39,1 mm und noch besser 39,9 +/- 0,2 mm. Eine zweite Distanz D2 in axialer Richtung von der axial äußeren Stirnseite 88 des Antreibers 16 zu der Außenseitenfläche 46 des kleinsten Ritzels R12 ist größer als 4,0 mm und ist bevorzugt 5,0 +/- 0,2 mm. Eine dritte Distanz D3 in axialer Richtung von der Außenseitenfläche 46 des kleinsten Ritzels R12 zu einer Umfangsfläche 90 des Rahmenabschnitts 1 bzw. des hinteren Ausfallendes 8 ist kleiner als 8,2 mm und bevorzugt 7,2 +/- 0,2 mm. In einigen Fällen weist der Rahmenabschnitt 1 bzw. dessen Ausfallende 8 eine vertiefte Fläche 92 auf, die zur Aufnahme des Schaltauges 22 dient. Eine vierte Distanz D4 in axialer Richtung von der Außenseitenfläche 46 des kleinsten Ritzels R12 zu der vertieften Fläche 92 kann kleiner als 12,2 mm sein und ist bevorzugt 11,2 +/- 0,2 mm.

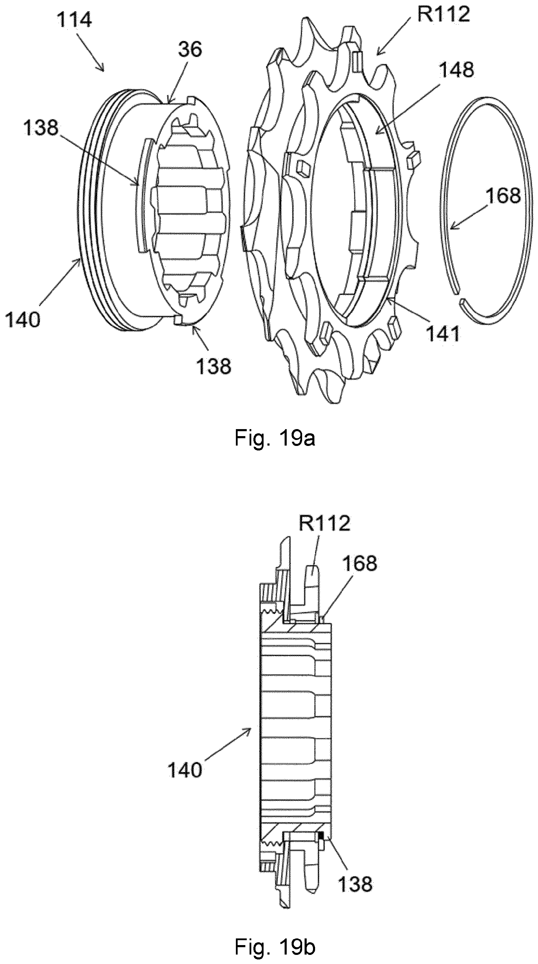

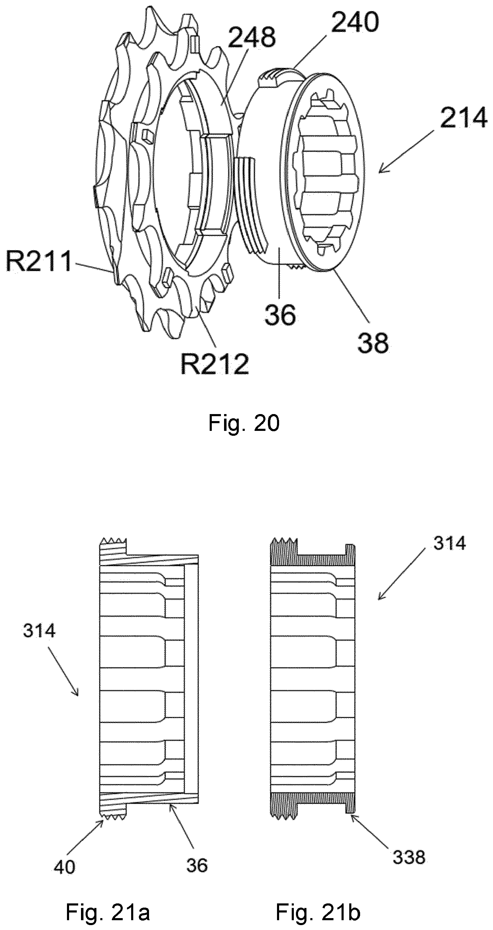

Die folgenden in den Figuren 19 und 20 gezeigten Ausführungen betreffen eine segmentierte Verschlussschraube. Die Segmente befinden sich an einem oder beiden axialen Enden 138, 240 der Außenumfangsfläche der Verschlussschraubenanordnung. Die Segmente der Verschlussschraube umfassen Abschnitte mit abwechselnd größeren und kleineren Außendurchmessern und sind auf eine ebenfalls segmentierte Innenumfangsfläche des kleinsten Ritzels abgestimmt. Die Segmente an der Innenumfangsfläche am kleinsten Ritzel umfassen ebenfalls Abschnitte mit abwechselnd kleinerem und größerem Innendurchmesser. Die segmentierte Verschlussschraube und das segmentierte Ritzel können durch Ineinanderstecken und zueinander Verdrehen mechanisch verbunden und auch wieder getrennt werden - Prinzip eines Bajonettverschlusses.

Die Figuren 19 a und b zeigen Ansichten der ersten Ausführung der segmentierten Verschlussschraube 114. Bei dieser Ausführung weist die Verschlussschraubenanordnung 114 einen Schaftabschnitt 36, einen segmentierten Anschlagabschnitt 138 und ein Außengewinde 140 auf. Die Segmente am Anschlagabschnitt 138 umfassen Abschnitte mit einem größeren Außendurchmesser d1 und einem kleineren Außendurchmesser d3. Der Außendurchmesser d1 der Abschnitte mit größerem Außendurchmesser ist größer als der Außendurchmesser d3 des Schaftabschnitts 36. Der Außendurchmesser d3 der Abschnitte mit kleinerem Außendurchmesser entspricht dem Außendurchmesser d3 des Schaftabschnitts 36. Das Gewinde 140 weist einen Außendurchmesser d2 auf, der größer als der Außendurchmesser d3 des Schaftabschnitts 36 ist.

Das kleinste Ritzel R112 weist eine segmentierte Innenumfangsfläche mit Ausnehmungen 148 auf. Die Segmente 138 der Verschlussschraube 114 sind auf die Segmente 148 des kleinsten Ritzels R112 abgestimmt. Das kleinste Ritzel R112 weist einen Innendurchmesser d5 und drei entlang des Innenumfangs verteilte Ausnehmungen 148 auf. Ein gedachter Durchmesser entlang der Ausnehmungen 148 ist größer als der Innendurchmesser d5 des kleinsten Ritzels R112 und auch größer als der Außendurchmesser d1 der Segmente 138 der Verschlussschraube 114. Die beiden kleinsten Ritzel werden so zur Verschlussschraube 114 orientiert, dass die Segmente 138 der Verschlussschraube 114 die Ausnehmungen 148 am Innenumfang des kleinsten Ritzels R112 passieren können. Wenn die Ritzel R11 und R112 auf die Verschlussschraube 114 aufgesteckt und im Schaftabschnitt 36 positioniert sind, werden die Ritzel relativ zur Schraube 114 verdreht, so dass die durchmessergrößeren Segmente 138 der Verschlussschraube 114 das kleinste Ritzel R112 hintergreifen und axial sichern - vgl. hierzu insbesondere Figur 19b. Der Innendurchmesser d5 der kleinsten an der Verschlussschraubenanordnung 114 aufgenommenen Ritzel R11, R112 ist größer als der Außendurchmesser d3 des Schaftabschnitts 36, so dass sich die Verschlussschraubenanordnung 114 relativ zu den Ritzeln drehen kann. Die Ritzel sind freitragend ausgebildet.

Zusätzlich kann ein Sicherungselement 168 die Ritzel R11 und R112 in axialer Richtung auf der Verschlussschraube 114 sichern. Das Sicherungselement 168 ist im montierten Zustand in axialer Richtung zwischen dem kleinsten Ritzel R112 und dem segmentierten Anschlagabschnitt 138 angeordnet. Das Sicherungselement 168 kann als Sprengring ausgebildet sein. Das kleinste Ritzel R112 kann eine Nut 141 zur Aufnahme des Sprengrings 168 aufweisen. Die kleinsten Ritzel R11 und R112 sind in axialer Richtung zwischen dem durchmessergrößeren Gewinde 140 und den durchmessergrößeren Segmenten 138 samt Sprengring 168 festgelegt.

Figur 20 zeigt eine alternative Ausführungsform der segmentierten Verschlussschraube 214. Wobei die Außenumfangsfläche der Verschlussschraube 214 ein segmentierten Gewindeabschnitt 240 aufweist. Die Verschlussschraube 214 umfasst einen Anschlagabschnitt 38, einen Schaftabschnitt 36 und ein segmentiertes Gewinde 240. Das Funktionsprinzip folgt der vorhergehenden Ausführungsform. In diesem Fall ist das Außengewinde 240 segmentiert ausgebildet und umfasst im Wechsel drei durchmessergrößere Gewindeabschnitte und drei durchmesserkleinere Abschnitte ohne Gewinde. Die Gewindeabschnitte 240 weisen einen Außendurchmesser d2 auf, welcher größer bemessen ist als der Außendurchmesser d3 des Schaftabschnitts 36. Auch der Anschlagabschnitt 38 hat einen Außendurchmesser d1, der größer als der Schaftabschnitt 36 bemessen ist - vergleiche hierzu auch die Ausführungen zu Figur 5.

Das kleinste Ritzel R212 weist eine segmentierte Innenumfangsfläche mit Ausnehmungen 248 auf. Die Segmente 240 der Verschlussschraube 214 sind auf die Segmente 248 des kleinsten Ritzels R212 abgestimmt. Das kleinste Ritzel R212 weist einen Innendurchmesser d5 und drei entlang des Innenumfangs verteilte Ausnehmungen 248 auf. Ein gedachter Innendurchmesser entlang der Ausnehmungen 248 ist größer als der Innendurchmesser d5 des kleinsten Ritzels R212 und auch größer als der Außendurchmesser d1 des Anschlagabschnitts 38 der Verschlussschraube 214. Die beiden kleinsten Ritzel R211, R212 werden so zur Verschlussschraube 214 orientiert, dass die Segmente 240 der Verschlussschraube 214 die Ausnehmungen 248 am Innenumfangs des kleinsten Ritzels R112 passieren können. Wenn die Ritzel R211 und R212 auf die Verschlussschraube 214 aufgesteckt und im Schaftabschnitt 36 positioniert sind, werden die Ritzel relativ zur Schraube 214 verdreht, so dass die durchmessergrößeren Gewindesegmente 240 der Verschlussschraube 214 das kleinste Ritzel R212 hintergreifen und axial sichern - vgl. hierzu insbesondere Figur 19b. Vorteilhaft bei dieser Ausführung ist, dass weder ein zusätzliches Bauteil (wie der Sprengring) oder eine Fügetechnik benötigt wird. Sobald die kleinsten Ritzel auf der Verschlussschraubenanordnung 214 montiert sind, können diese aufgrund des axialen Anschlagabschnitts 38 nicht mehr nach axial außen abgezogen werden. Wenn in einem nächsten Schritt die Verschlussschraubenanordnung 214 mit den Ritzeln R211, R212 über die Gewindesegmente 240 mit dem Innengewinde 34 des Antreibers verschraubt wird, sind die Ritzel auch nach axial innen festgelegt.

Bei der in den Figuren 21a, 21b gezeigten Ausführungsform wird die Verschlussschraube zunächst einstückig bzw. integral hergestellt und in einem weiteren Verarbeitungsschritt an einem oder beiden axialen Enden der Außendurchmesser durch Umformen vergrößert. Dies erlaubt eine kostengünstige Herstellung ohne zusätzliche Bauteile oder Fügeverfahren. Es können der Außendurchmesser des axialen Anschlagabschnitts und/oder des Gewindeabschnitts durch Umformen, z. B. durch Bördeln vergrößert werden.

Figur 21a zeigt eine Schnittansicht der einstückig hergestellten Verschlussschraube 314 mit dem Gewinde 40, dem Schaftabschnitt 36 und dem daran anschließenden, noch nicht umgeformten axialen Ende. Das axiale Ende und der Schaftabschnitt 36 weisen den gleichen Außendurchmesser d3 auf. Figur 21b zeigt den umgeformten Anschlagabschnitt 338 mit dem vergrößerten Außendurchmesser d1. Durch das Umformen wird der Außendurchmesser d1 des axial außenliegenden Anschlagabschnitts 338 relativ zum Außendurchmesser d3 des Schaftabschnitts 36 vergrößert. Alternativ könnte auch der durchmessergrößere Gewindeabschnitts 40 durch Umformen hergestellt werden. Es können weitere Bearbeitungsschritte, wie Gewinde(nach)schneiden folgen.

Auch wenn sich die vorstehenden Ausführungsbeispiele auf eine Mehrfachritzelanordnung mit 12 Ritzeln beziehen, kann die Erfindung gleichermaßen auf eine Mehrfachritzelanordnung mit anderen Ritzelzahlen, wie 11 oder 13 Ritzeln angewendet werden.

Für ein besseres Verständnis werden im Folgenden verschiedene Aspekte der Erfindung genannt:
Aspekt 1: Mehrfachritzel-Baugruppe (10) für eine Hinterradbaugruppe (3) für ein Fahrrad mit Kettenschaltung, umfassend eine Mehrfachritzelanordnung (12) und eine Verschlussschraubenanordnung (14), wobei die Mehrfachritzelanordnung (12) zur drehmomentübertragenden Kopplung mit einem Antreiber (16) der Hinterradbaugruppe (3) ausgebildet ist und wenigstens 11 Ritzel mit sich unterscheidenden Zähnezahlen umfasst, wobei die Mehrfachritzel-Baugruppe (10) derart ausgebildet ist, dass im montierten Zustand wenigstens zwei der kleinsten Ritzel (R11, R12) über die Verschlussschraubenanordnung (14) an dem Antreiber (16) axial fixiert sind, wobei die Verschlussschraubenanordnung (14) einen Schaftabschnitt (36) zur Aufnahme wenigstens eines der wenigstens zwei kleinsten Ritzel (R11, R12) aufweist, wobei der Schaftabschnitt (36) an seinem einen Endbereich mit einem axial außenliegenden Anschlagabschnitt (38) versehen ist und wobei dem Schaftabschnitt (36) an seinem entgegengesetzten Endbereich wenigstens ein Außengewinde (40) zugeordnet ist, mit dem die Verschlussschraubenanordnung (14) in ein zugeordnetes Innengewinde (34) zum Fixieren der Verschlussschraubenanordnung (14) einschraubbar ist, wobei das dem Schaftabschnitt zugeordnete Außengewinde (40) einen Außendurchmesser (d2) aufweist, der größer ist als ein Außendurchmesser (d3) des Schaftabschnitts (36) in demjenigen Bereich, in dem das wenigstens eine der wenigstens zwei kleinsten Ritzel (R11, R12) aufgenommen ist.
Aspekt 2: Mehrfachritzel-Baugruppe (10) nach Aspekt 1, wobei an dem Schaftabschnitt (36) wenigstens ein Ritzel (R12) zusammen mit einem diesem Ritzel (R12) zugeordneten Verbindungsabschnitt (60) aufgenommen ist, vorzugsweise zwei Ritzel (R11, R12) mit einem dazwischenliegenden Verbindungsabschnitt (60) aufgenommen sind.
Aspekt 3: Mehrfachritzel-Baugruppe (10) nach einem der vorangehenden Aspekte, wobei das wenigstens eine der wenigsten zwei kleinsten Ritzel (R11, R12), das an dem Schaftabschnitt (36) aufgenommen ist, freitragend ausgeführt ist.
Aspekt 4: Mehrfachritzel-Baugruppe (10) nach einem der vorangehenden Aspekte, wobei das dem Schaftabschnitt zugeordnete Außengewinde (40) integral an dem Schaftabschnitt (36) angeformt ist oder mit diesem integral hergestellt ist oder/und der axial außenliegende Anschlagabschnitt (38) integral an dem Schaftabschnitt (36) angeformt ist oder mit diesem integral hergestellt ist.
Aspekt 5: Mehrfachritzel-Baugruppe (10) nach einem der vorangehenden Aspekte, wobei die Verschlussschraubenanordnung (14) mindestens eine Fügestelle (52, 54, 56) aufweist und die mindestens eine Fügestelle (52, 54, 56,) insbesondere orthogonal oder parallel zu einer Drehachse (32) der Mehrfachritzelanordnung (12) verläuft.
Aspekt 6: Mehrfachritzel-Baugruppe (10) nach einem der Aspekte 1 bis 3, wobei der axial außenliegende Anschlagabschnitt (38) von dem Schaftabschnitt (36) lösbar ist und in Form eines Sicherungselements (68) ausgebildet ist, das mit dem Schaftabschnitt (36) verbindbar ist, bevorzugt in eine Nut (70) des Schaftabschnitts (36) eingreift.
Aspekt 7: Mehrfachritzel-Baugruppe (10) nach einem der vorangehenden Aspekte, wobei der axial außenliegende Anschlagabschnitt (38) durch eine Mehrzahl von Schnapphaken (66) gebildet ist, die über den äußeren Umfang der Verschlussschraubenanordnung (14) verteilt angeordnet sind, wobei der Schaftabschnitt (36) oder/und die Schnapphaken (66) eine derartige Elastizität aufweisen, dass ein Ritzel (R12) oder eine Anordnung aus mehreren Ritzeln (R11, R12) mit einem Innendurchmesser (d5) ausgebildet sind, der kleiner ist als der Außendurchmesser der Schnapphaken (66) und der über die Schnapphaken (66) schiebbar ist, sodass dieses oder diese im Bereich des Schaftabschnitts (36) aufgenommen ist bzw. sind.
Aspekt 8: Mehrfachritzel-Baugruppe (10) nach einem der vorangehenden Aspekt, wobei die Verschlussschraubenanordnung (14) ein erstes und ein zweites Bauteil (74, 76) umfasst, die voneinander lösbar sind, das dem Schaftabschnitt zugeordnete Außengewinde (40) von dem ersten Bauteil (74) umfasst ist, und der axial außenliegende Anschlagabschnitt (38) von dem zweiten Bauteil (76) umfasst ist.
Aspekt 9: Mehrfachritzel-Baugruppe (10) nach Aspekt 8, wobei das erste und das zweite Bauteil (74, 76) miteinander verschraubbar sind.
Aspekt 10: Mehrfachritzel-Baugruppe (10) nach Aspekt 8 oder 9, wobei das erste Bauteil (74) eine erste Werkzeugschnittstelle (80) und das zweite Bauteil (76) eine zweite Werkzeugschnittstelle (82) aufweist, wobei die zwei Werkzeugschnittstellen (74, 76) zum Eingriff eines gleichen Werkzeugs (83) oder zweier unterschiedlicher Werkzeuge (83) eingerichtet sind.
Aspekt 11. Mehrfachritzel-Baugruppe (10) nach Aspekt 10, wobei das erste Bauteil (74) ferner ein erstes Verbindungsgewinde (78) aufweist, das dazu eingerichtet ist, in ein komplementäres zweites Verbindungsgewinde (79) des zweiten Bauteils (76) einzugreifen, wobei die Verbindungsgewinde (78, 79) zwischen dem Schaftabschnitt (36) und dem diesen zugeordneten Außengewinde (40) angeordnet sind, oder im Bereich des Schaftabschnitts (36) angeordnet sind, oder zwischen dem Schaftabschnitt (36) und dem Anschlagabschnitt (38) angeordnet sind.
Aspekt 12: Mehrfachritzel-Baugruppe (10) nach Aspekt 11, wobei das Verbindungsgewinde (78) des ersten Bauteils (74) ein Außengewinde ist und das komplementäre Verbindungsgewinde (79) des zweiten Bauteils (76) ein Innengewinde ist oder wobei das Verbindungsgewinde (78) des ersten Bauteils (74) ein Innengewinde ist und das komplementäre Verbindungsgewinde (79) des zweiten Bauteils (76) ein Außengewinde ist.
Aspekt 13: Mehrfachritzel-Baugruppe (10) nach einem der vorangehenden Aspekte, wobei das wenigstens eine an dem Schaftabschnitt (36) aufgenommene Ritzel (R12) relativ zu der Verschlussschraubenanordnung (14) drehbar ist.
Aspekt 14: Mehrfachritzel-Baugruppe (10) nach einem der vorangehenden Aspekte, wobei der Außendurchmesser (d2) des dem Schaftabschnitt zugeordneten Außengewindes (40) größer ist als ein Innendurchmesser (d4) des kleinsten Ritzels der Mehrfachritzelanordnung (12).
Aspekt 15: Mehrfachritzel-Baugruppe (10) nach einem der vorangehenden Aspekte, wobei das kleinste Ritzel (R12) der Mehrfachritzelanordnung (12) an seiner Außenseitenfläche (46) eine sich radial und axial erstreckende Aussparung (41) aufweist, die derart ausgebildet ist, dass der axial außenliegende Anschlagabschnitt (38) in diese eingreifen kann.
Aspekt 16: Mehrfachritzel-Baugruppe (10) nach Aspekt 15, wobei dann, wenn der axial außenliegende Anschlagabschnitt (38) in die radiale und axiale Aussparung (41) des kleinsten Ritzels der Mehrfachritzelanordnung (12) eingreift, die Außenseitenfläche (46) des kleinsten Ritzels (R12) axial weiter außen liegt als eine Stirnseite des axial außenliegenden Anschlagabschnitts (38), oder die Außenseitenfläche (46) des kleinsten Ritzels (R12) in einer Flucht mit der Stirnseite des axial außenliegenden Anschlagabschnitts (38) liegt, oder der axial außenliegende Anschlagabschnitt (38) weniger als maximal 0,5 mm, bevorzugt weniger als 0,2 mm, axial nach außen von der Außenseitenfläche (46) des kleinsten Ritzels (R12) hervorsteht.
Aspekt 17: Mehrfachritzel-Baugruppe (10) nach einem der vorangehenden Aspekte, wobei die Verschlussschraubenanordnung (14) einteilig ausgeführt ist und als ein mit den an dem Schaftabschnitt (36) aufgenommenen wenigstens einem Ritzel (R12) 3D gedrucktes Bauteil bereitgestellt ist.
Aspekt 18: Mehrfachritzel-Baugruppe (10) nach einem der vorangehenden Aspekte, wobei: der Antreiber (16) an einem ersten Antreiber-Bereich seiner radialen Außenfläche ein Mitnehmerprofil (26) aufweist, das entlang einer ersten axialen Antreiber-Länge (LA1) von dem Antreiberanschlag (86) nach axial außen (Aₐ) angeordnet ist, wobei weiter die erste axiale Antreiber-Länge (LA1) kleiner ist als eine zweite axiale Antreiber-Länge (LA2), die sich von dem Antreiberanschlag (86) bis zur axial äußeren Stirnseite (88) des Antreibers erstreckt, wobei weiter der Antreiber (16) an einem zweiten Antreiber-Bereich seiner radialen Außenfläche, der der axial äußeren Stirnseite (88) des Antreibers benachbart ist, frei von Mitnehmerprofilen ist, wobei weiter der Antreiber (16) eine Öffnung aufweist, die sich von einer Antreiber-Mittelachse nach radial außen (Rₐ) und von der axial äußeren Stirnseite (88) des Antreibers nach axial innen (Aᵢ) erstreckt, und wobei die Öffnung an ihrer radialen Innenfläche das Innengewinde (34) aufweist.
Aspekt 19: Mehrfachritzel-Baugruppe (10) nach Aspekt 18, wobei die erste axiale Antreiber-Länge (LA1) des Antreibers (16) von dem Antreiberanschlag (86) bis zum Ende der Mitnehmerprofile (26) größer als 32,9 mm ist, bevorzugt 33,2 +/- 0,4 mm ist, oder/und die zweite axiale Antreiber-Länge (LA2) des Antreibers (16) von dem Antreiberanschlag (86) bis zu der axial äußeren Stirnseite (88) des Antreibers größer als 34,2 mm ist, bevorzugt 34,9 +/- 0,3 mm ist, oder/und ein erster Antreiber-Außendurchmesser (dA1) des Antreibers (16) im ersten Antreiber-Bereich entlang der ersten axialen Antreiber-Länge (LA1) des Antreibers größer als 34,2 mm ist, bevorzugt 34,5 +/- 0,2 mm ist, oder/und ein zweiter Antreiber-Außendurchmesser (dA2) des Antreibers (16) im zweiten Antreiber-Bereich, der der axial äußeren Stirnseite (88) des Antreibers benachbart ist, größer als 31,4 mm ist, bevorzugt 32,1 +0,4/- 0,2 mm ist, oder/und ein erster Antreiber-Innendurchmesser (dA3) des Antreibers (16) axial benachbart seiner axial äußeren Stirnseite (88) größer als 29,8 mm ist, bevorzugt 30,6 +/- 0,2 mm ist.
Aspekt 20: Mehrfachritzel-Baugruppe (10) nach einem der Aspekte 18 oder 19, wobei die Mehrfachritzel-Baugruppe (10) derart ausgebildet ist, dass im montierten Zustand folgendes gilt: eine erste Distanz (D1) in axialer Richtung von dem Antreiberanschlag (86) bis zu der Außenseitenfläche (46) des Ritzels (R12) mit der kleinsten Zähnezahl ist größer als 38,0 mm, ist bevorzugt größer als 39,1 mm, ist noch bevorzugter 39,9 +/- 0,2 mm, oder/und eine zweite Distanz (D2) in axialer Richtung von der axial äußeren Stirnseite (88) des Antreibers (16) zu einer Außenseitenfläche (46) des kleinsten Ritzels (R12) ist größer als 4,0 mm, ist bevorzugt 5,0 +/- 0,2 mm.
Aspekt 21: Mehrfachritzel-Baugruppe (10) nach Aspekt 19 und 20, wobei ein erster Raumnutzfaktor, der sich aus dem Verhältnis der zweiten Antreiber-Länge (LA2) und der zweiten Distanz (D2) ergibt, in einem Bereich zwischen 5 und 10 liegt.
Aspekt 22: Mehrfachritzel-Baugruppe (10) nach Aspekt 21 oder nach den Aspekten 19 und 20, wobei ein zweiter Raumnutzfaktor, der sich aus dem Verhältnis der ersten Antreiber-Länge (LA1) und der zweiten Distanz (D2) ergibt, in einem Bereich zwischen 5 und 10 liegt.
Aspekt 23: Mehrfachritzel-Baugruppe (10) nach einem der Aspekte 18 bis 22, wobei das Mitnehmerprofil (26) an seiner Außenumfangsfläche radial von dieser vorstehende Splines umfasst, wobei die Anzahl der Splines größer oder gleich 8 ist, bevorzugt größer oder gleich 9 ist.
Aspekt 24: Hinterradbaugruppe (3) für ein Fahrrad mit Kettenschaltung, umfassend: eine zwischen zwei gegenüberliegenden Rahmenabschnitten (1, 2) eines Fahrradrahmens anordenbare Hinterradnabe (11), einen drehbar mit der Hinterradnabe (11) gekoppelten Antreiber (16) und eine Mehrfachritzel-Baugruppe (10) nach einem der vorangehenden Aspekte, wobei die Mehrfachritzelanordnung (12) der Mehrfachritzel-Baugruppe (10) drehfest mit dem Antreiber (16) gekoppelt oder koppelbar ist.

## Patentansprüche

1. Mehrfachritzel-Baugruppe (10) für eine Hinterradbaugruppe (3) für ein Fahrrad mit Kettenschaltung, umfassend eine Mehrfachritzelanordnung (12) und eine Verschlussschraubenanordnung (14),
- wobei die Mehrfachritzelanordnung (12)
- zur drehmomentübertragenden Kopplung mit einem Antreiber (16) der Hinterradbaugruppe (3) ausgebildet ist und
- wenigstens 11 Ritzel mit sich unterscheidenden Zähnezahlen umfasst,
- wobei die Mehrfachritzel-Baugruppe (10) derart ausgebildet ist, dass im montierten Zustand wenigstens zwei der kleinsten Ritzel (R11, R12) über die Verschlussschraubenanordnung (14) an dem Antreiber (16) axial fixiert sind,
- wobei die Verschlussschraubenanordnung (14) einen Schaftabschnitt (36) zur Aufnahme wenigstens eines der wenigstens zwei kleinsten Ritzel (R11, R12) aufweist, wobei der Schaftabschnitt (36) an seinem einen Endbereich mit einem axial außenliegenden Anschlagabschnitt (38) versehen ist und wobei dem Schaftabschnitt (36) an seinem entgegengesetzten Endbereich wenigstens ein Außengewinde (40) zugeordnet ist, mit dem die Verschlussschraubenanordnung (14) in ein zugeordnetes Innengewinde (34) zum Fixieren der Verschlussschraubenanordnung (14) einschraubbar ist,
- wobei das dem Schaftabschnitt zugeordnete Außengewinde (40) einen Außendurchmesser (d2) aufweist, der größer ist als ein Außendurchmesser (d3) des Schaftabschnitts (36) in demjenigen Bereich, in dem das wenigstens eine der wenigstens zwei kleinsten Ritzel (R11, R12) aufgenommen ist.

2. Mehrfachritzel-Baugruppe (10) nach Anspruch 1, wobei an dem Schaftabschnitt (36) wenigstens ein Ritzel (R12) zusammen mit einem diesem Ritzel (R12) zugeordneten Verbindungsabschnitt (60) aufgenommen ist, vorzugsweise zwei Ritzel (R11, R12) mit einem dazwischenliegenden Verbindungsabschnitt (60) aufgenommen sind.

3. Mehrfachritzel-Baugruppe (10) nach einem der vorangehenden Ansprüche, wobei das wenigstens eine der wenigsten zwei kleinsten Ritzel (R11, R12), das an dem Schaftabschnitt (36) aufgenommen ist, freitragend ausgeführt ist.

4. Mehrfachritzel-Baugruppe (10) nach einem der vorangehenden Ansprüche, wobei
- das dem Schaftabschnitt zugeordnete Außengewinde (40) integral an dem Schaftabschnitt (36) angeformt ist oder mit diesem integral hergestellt ist oder/und
- der axial außenliegende Anschlagabschnitt (38) integral an dem Schaftabschnitt (36) angeformt ist oder mit diesem integral hergestellt ist.

5. Mehrfachritzel-Baugruppe (10) nach einem der vorangehenden Ansprüche, wobei
- die Verschlussschraubenanordnung (14) mindestens eine Fügestelle (52, 54, 56) aufweist und
- die mindestens eine Fügestelle (52, 54, 56,) insbesondere orthogonal oder parallel zu einer Drehachse (32) der Mehrfachritzelanordnung (12) verläuft.

6. Mehrfachritzel-Baugruppe (10) nach einem der Ansprüche 1 bis 3, wobei der axial außenliegende Anschlagabschnitt (38) von dem Schaftabschnitt (36) lösbar ist und in Form eines Sicherungselements (68) ausgebildet ist, das mit dem Schaftabschnitt (36) verbindbar ist, bevorzugt in eine Nut (70) des Schaftabschnitts (36) eingreift.

7. Mehrfachritzel-Baugruppe (10) nach einem der vorangehenden Ansprüche, wobei der axial außenliegende Anschlagabschnitt (38) durch eine Mehrzahl von Schnapphaken (66) gebildet ist, die über den äußeren Umfang der Verschlussschraubenanordnung (14) verteilt angeordnet sind, wobei der Schaftabschnitt (36) oder/und die Schnapphaken (66) eine derartige Elastizität aufweisen, dass ein Ritzel (R12) oder eine Anordnung aus mehreren Ritzeln (R11, R12) mit einem Innendurchmesser (d5) ausgebildet sind, der kleiner ist als der Außendurchmesser der Schnapphaken (66) und der über die Schnapphaken (66) schiebbar ist, sodass dieses oder diese im Bereich des Schaftabschnitts (36) aufgenommen ist bzw. sind.

8. Mehrfachritzel-Baugruppe (10) nach einem der vorangehenden Ansprüche, wobei
- die Verschlussschraubenanordnung (14) ein erstes und ein zweites Bauteil (74, 76) umfasst, die voneinander lösbar sind,
- das dem Schaftabschnitt zugeordnete Außengewinde (40) von dem ersten Bauteil (74) umfasst ist, und
- der axial außenliegende Anschlagabschnitt (38) von dem zweiten Bauteil (76) umfasst ist.

9. Mehrfachritzel-Baugruppe (10) nach Anspruch 8, wobei das erste und das zweite Bauteil (74, 76) miteinander verschraubbar sind.

10. Mehrfachritzel-Baugruppe (10) nach Anspruch 8 oder 9, wobei das erste Bauteil (74) eine erste Werkzeugschnittstelle (80) und das zweite Bauteil (76) eine zweite Werkzeugschnittstelle (82) aufweist, wobei die zwei Werkzeugschnittstellen (74, 76) zum Eingriff eines gleichen Werkzeugs (83) oder zweier unterschiedlicher Werkzeuge (83) eingerichtet sind.

11. Mehrfachritzel-Baugruppe (10) nach Anspruch 10, wobei das erste Bauteil (74) ferner ein erstes Verbindungsgewinde (78) aufweist, das dazu eingerichtet ist, in ein komplementäres zweites Verbindungsgewinde (79) des zweiten Bauteils (76) einzugreifen, wobei die Verbindungsgewinde (78, 79)
- zwischen dem Schaftabschnitt (36) und dem diesen zugeordneten Außengewinde (40) angeordnet sind, oder
- im Bereich des Schaftabschnitts (36) angeordnet sind, oder
- zwischen dem Schaftabschnitt (36) und dem Anschlagabschnitt (38) angeordnet sind.

12. Mehrfachritzel-Baugruppe (10) nach Anspruch 11, wobei das Verbindungsgewinde (78) des ersten Bauteils (74) ein Außengewinde ist und das komplementäre Verbindungsgewinde (79) des zweiten Bauteils (76) ein Innengewinde ist oder
wobei das Verbindungsgewinde (78) des ersten Bauteils (74) ein Innengewinde ist und das komplementäre Verbindungsgewinde (79) des zweiten Bauteils (76) ein Außengewinde ist.

13. Mehrfachritzel-Baugruppe (10) nach einem der vorangehenden Ansprüche, wobei das wenigstens eine an dem Schaftabschnitt (36) aufgenommene Ritzel (R12) relativ zu der Verschlussschraubenanordnung (14) drehbar ist.

14. Mehrfachritzel-Baugruppe (10) nach einem der vorangehenden Ansprüche, wobei der Außendurchmesser (d2) des dem Schaftabschnitt zugeordneten Außengewindes (40) größer ist als ein Innendurchmesser (d4) des kleinsten Ritzels der Mehrfachritzelanordnung (12).

15. Mehrfachritzel-Baugruppe (10) nach einem der vorangehenden Ansprüche, wobei das kleinste Ritzel (R12) der Mehrfachritzelanordnung (12) an seiner Außenseitenfläche (46) eine sich radial und axial erstreckende Aussparung (41) aufweist, die derart ausgebildet ist, dass der axial außenliegende Anschlagabschnitt (38) in diese eingreifen kann.

16. Hinterradbaugruppe (3) für ein Fahrrad mit Kettenschaltung, umfassend:
- eine zwischen zwei gegenüberliegenden Rahmenabschnitten (1, 2) eines Fahrradrahmens anordenbare Hinterradnabe (11),
- einen drehbar mit der Hinterradnabe (11) gekoppelten Antreiber (16) und
- eine Mehrfachritzel-Baugruppe (10) nach einem der vorangehenden Ansprüche,
- wobei die Mehrfachritzelanordnung (12) der Mehrfachritzel-Baugruppe (10) drehfest mit dem Antreiber (16) gekoppelt oder koppelbar ist.
